# EUROPEAN PATENT APPLICATION

(11) **EP 4 397 485 A1**
(43) Date of publication of application: **10.07.2024**
(21) Application number: 22864757.4
(22) Date of filing: 05.09.2022
(51) Int. Cl.: B32B 27/00, B32B 27/36, C08L 101/00, B32B 7/12

(54) **MULTI-LAYER BODY AND MOLDED ARTICLE**

(30) Priority: 03.09.2021 JP 2021144332
(71) Applicant: Mitsubishi Chemical Corporation, Chiyoda-ku Tokyo 100-8251 (JP)
(72) Inventor: KOBAYASHI Rina, Hiratsuka-shi, Kanagawa 254-0016 (JP)
(74) Representative: Hoffmann Eitle
(86) International application number: PCT/JP2022/033295
(87) International publication number: WO 2023/033175

(57) **Abstract**

To provide a resin composition, and the molded product formed from the resin composition. The resin composition contains a crystalline thermoplastic resin (A) and an acid-modified polymer (B), wherein a content of the crystalline thermoplastic resin (A) in the resin composition is higher than a content of the acid-modified polymer (B) in the resin composition, and a content of acid in the resin composition is 0.5% by mass or more.

## Description

### [Technical Field]

The present invention relates to a multilayer body and a molded article.

### [Background Art]

Crystalline thermoplastic resins are easy to process and also have excellent mechanical properties, heat resistance, and other physical and chemical properties. For this reason, they are widely used in automotive parts, electric and electronic equipment parts, and other precision machinery parts. In particular, polybutylene terephthalate resin has high crystallization rate, and thus has been suitably used for injection molding.

For example, Patent Literature 1 discloses a glass fiber-reinforced polyester resin composition prepared by mixing 100 parts by weight of a resin (A) comprising, as the main component, polyester comprising (a) 50 to 96% by weight of a polyester resin, (b) 35 to 3% by weight of a rubber-modified polystyrene resin and (c) 15 to 1% by weight of an aromatic polycarbonate resin and/or a styrene-maleic anhydride copolymer, and (B) 10 to 150 parts by weight of a glass fiber to which a sizing agent comprising an amino silane coupling agent and a novolac epoxy resin is attached at least in some part and (C) 0.1 to 3 parts by weight of an epoxy compound.

Furthermore, Patent Literature 2 discloses, as a resin composition with small shrinkage, a polybutylene terephthalate resin composition comprising (A) 25 to 90% by weight of a polybutylene terephthalate resin, (B) 25 to 1% by weight of a polyester resin other than polybutylene terephthalate, which has a crystallization temperature of 140 to 210°C, (C) 35 to 3% by weight of a rubber-modified polystyrene resin and (D) 15 to 1% by weight of at least one selected from an aromatic polycarbonate resin and a styrene-maleic anhydride copolymer (the total amount of (A) to (D) being 100% by weight).

### [Citation List]

### [Patent Literature]

[Patent Literature 1] Japanese Patent Laid-Open No. 2006-016559
[Patent Literature 2] Japanese Patent Laid-Open No. 2006-219626

### [Summary of Invention]

### [Technical Problem]

Meanwhile, bonding of a molded product formed from crystalline thermoplastic resin to other materials such as other resin members using adhesive has been widely performed.

An object of the present invention is to solve the above problem and provide a multilayer body comprising a molded product prepared by molding a resin composition comprising a crystalline thermoplastic resin, and a further member, which has excellent adhesion between the molded product and the further member, and a molded article comprising the multilayer body.

### [Solution to Problem]

The present inventors conducted research to address the above-m entioned problems, and as a result, discovered that improving adhesi veness to the further member is possible by mixing an acid-modified polymer to the crystalline thermoplastic resin, and by using the molded product formed from the resin composition in which the amount of acid is adjusted the resin composition, which led to solution to the above-mentioned problems.

Specifically, the problems described above are solved by the following means.
<1> A multilayer body containing:
   a molded product formed from a resin composition comprising a crystalline thermoplastic resin (A) and an acid-modified polymer (B); and a further member bonded to the molded product directly, or via at least an adhesive, wherein a content of the crystalline thermoplastic resin (A) in the resin composition is higher than a content of the acid-modified polymer (B) in the resin composition, and a content of acid in the resin composition is 0.5% by mass or more.
<2> The multilayer body according to <1>, wherein the molded product and the further member are directly bonded in some part.
<3> The multilayer body according to <1>, further comprising an adhesive, wherein the molded product and the further member are bonded via at least the adhesive.
<4> The multilayer body according to any one of <1> to <3>, wherein the crystalline thermoplastic resin (A) comprises a crystalline thermoplastic polyester resin.
<5> The multilayer body according to any one of <1> to <3>, wherein the crystalline thermoplastic resin (A) comprises a polybutylene terephthalate resin.
<6> The multilayer body according to any one of <1> to <3>, wherein the acid-modified polymer (B) has a weight average molecular weight of 150,000 or more.
<7> The multilayer body according to any one of <1> to <3>, wherein the content of acid in the resin composition is 1% by mass or more.
<8> The multilayer body according to any one of <1> to <3>, wherein the acid-modified polymer (B) comprises a maleic anhydride polymer.
<9> The multilayer body according to any one of <1> to <3>, wherein the acid-modified polymer (B) comprises a styrene-maleic anhydride polymer.
<10> The multilayer body according to any one of <1> to <3>, wherein the molded product has an arithmetic mean height (Sa) of 1.0 or more in a region to be bonded to the further member.
<11> The multilayer body according to any one of <1> to <3>, wherein the resin composition further comprises an amorphous thermoplastic resin (C) other than the acid-modified polymer (B).
<12> The multilayer body according to <11>, wherein the amorphous thermoplastic resin (C) comprises a styrenic resin.
<13> The multilayer body according to any one of <1> to <3>, wherein the resin composition further comprises an impact modifier.
<14> The multilayer body according to <13>, wherein the impact modifier comprises a core-shell elastomer.
<15> The multilayer body according to any one of <1> to <3>, wherein the resin composition further comprises a reinforcing filler.
<16> The multilayer body according to <15>, wherein the reinforcing filler comprises glass.
<17> The multilayer body according to any one of <1> to <3>, wherein the resin composition further comprises a flame retardant.
<18> The multilayer body according to <1>, wherein the crystalline thermoplastic resin (A) comprises a polybutylene terephthalate resin, the content of acid in the resin composition is 1% by mass or more, the acid-modified polymer (B) comprises a styrene-maleic anhydride polymer, the resin composition further comprises an amorphous thermoplastic resin (C) other than the acid-modified polymer (B), the amorphous thermoplastic resin (C) comprises a styrenic resin, and the resin composition further comprises a glass fiber.
<19> The multilayer body according to <18>, wherein the resin composition further comprises a core-shell elastomer.
<20> A molded article comprising the multilayer body according to any one of claims <1> to <3>, <18> and <19>.

### [Advantageous Effect of Invention]

The present invention can provide a multilayer body comprising a molded product prepared by molding a resin composition comprising a crystalline thermoplastic resin, and a further member, which has excellent adhesion between the molded product and the further member, and a molded article comprising the multilayer body.

### [Brief Description of Drawing]

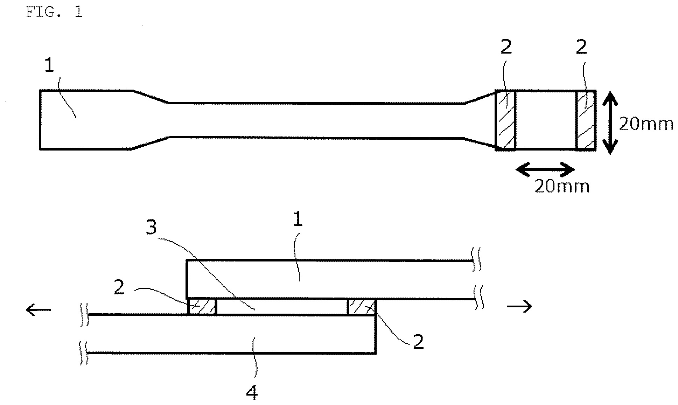

[Figure 1] Figure 1 is a schematic view illustrating a method for measuring adhesion strength in Examples.

### [Description of Embodiments]

In the following, embodiments for practicing the present invention (hereinafter simply referred to as "the present embodiment") will be described in detail. The following present embodiments are examples for illustrating the present invention, and the present invention is not limited to the present embodiments alone.

In the present description, "to" is used to mean that the numerical values before and after "to" are inclusive as the lower limit and the upper limit, respectively.

Physical property values and characteristic values in the present description are obtained at 23°C unless otherwise specified.

In the present description, the weight average molecular weight and the number-average molecular weight are measured by GPC (gel permeation chromatography) using HLC-8320GPC EcoSEC made by Tosoh Corporation using tetrahydrofuran as the solvent and three of Shodex KF-G, KF-805L and KF-800D as the columns at a column temperature of 40°C and a flow rate of 1.2 mL/min, and detected by a detector (UV-8320) at a detection wavelength of 254 nm in terms of polystyrene unless otherwise specified.

In the case where the standard of measurement methods and the like shown in the present description varies depending on the year, the standard as of January 1, 2021 applies unless otherwise specified.

The multilayer body of the present embodiment comprises a molded product formed from a resin composition comprising a crystalline thermoplastic resin (A) and an acid-modified polymer (B), and a further member bonded to the molded product directly, or via at least an adhesive, and the content of the crystalline thermoplastic resin (A) in the resin composition is higher than the content of the acid-modified polymer (B) in the resin composition, and the content of acid is 0.5% by mass or more in the resin composition.

By using a resin composition in which the amount of acid is adjusted to not less than a specific amount, a multilayer body with excellent adhesiveness between a molded product prepared from the resin composition and a further member is considered to be obtained.

In this regard, the molded product and the further member may be directly bonded, or via at least an adhesive. In other words, since the molded product has excellent adhesiveness, the molded product may also be bonded to a further member itself without an adhesive. Another advantage is that even when the molded product is bonded to a further member via at least an adhesive, the two can be thoroughly bonded without providing, for example, an undercoat layer. In short, the molded product may be bonded to a further member only via an adhesive. Off course the molded product and a further member may also be bonded via an undercoat layer and an adhesive.

That is, a first aspect of the present embodiment is a multilayer body in which a molded product and a further member are directly bonded in some part. This includes, for example, a multilayer body in which a further member is a sealing agent such as epoxy resin and silicone rubber, or a coating agent (including paint and surface coating). More specifically, the multilayer body of the first embodiment includes a multilayer body with a sealing agent such as an epoxy resin or silicone rubber on the surface of the molded product, and a multilayer body having a coating agent (including paint and surface coating) on the surface of the molded product. Furthermore, the multilayer body of the present embodiment may be a molded product prepared by a mold molding method, in particular, compression molding or transfer molding, and may also be a molded product prepared by a welding method, and a multilayer body and a molded product prepared by applying a plurality of liquids on the surface of a molded product to cause reaction and then curing them.

A second aspect of the present embodiment is a multilayer body further comprising an adhesive agent, in which the molded product and a further member are bonded via at least an adhesive. Examples thereof include a multilayer body in which a molded product formed from the resin composition according to the present embodiment is bonded to a member made of metal with an adhesive, a multilayer body in which a molded product formed from the resin composition according to the present embodiment is bonded to a member made of glass with an adhesive, and a multilayer body in which a molded product formed from the resin composition according to the present embodiment is bonded to a member formed from the resin composition according to the present embodiment or another resin composition with an adhesive. Examples may also include a multilayer body in which the molded product formed from the resin composition according to the present embodiment is bonded to a further member using an undercoat layer and an adhesive.

The molded product, the multilayer body and the molded article according to the present embodiment are suitably used as a part in electrical and electronic equipment, OA equipment, mobile information terminals, machines, home appliances, vehicle parts, various containers, lighting equipment, displays and the like. In particular, they are preferably used for vehicle parts. The molded article according to the present embodiment comprises a multilayer body, and may be a part or a finished product.

The molded product according to the present embodiment has excellent adhesiveness to an adhesive, a sealing agent, a decorating agent, a coating agent (including paint and surface coating) and further members as described above. Thus, the molded product is preferably used for a multilayer body in which a molded product and a further member are bonded using an adhesive, or in applications in which molded products are sealed by a sealing agent, decorated using a decorating agent, or coated with a coating agent or the like.

The further members mean a member made of a thermoplastic resin, a thermosetting resin, metal, glass and the like as described above.

Specifically, use for ignition cases, censor housing, ECU housing, fuel caps, window regulators, automotive connectors, relay cases, motor cases, various cases, various tubes, and the like is preferred.

The adhesive means a substance which bonds two materials, and is usually not thermoplastic. It is preferable that the adhesive is in the form of a layer (an adhesive layer) . The adhesive layer has a thickness of preferably 0.01 µm or more and more preferably 0.1 µm or more, and preferably 10,000 µm or less and more preferably 5,000 µm or less.

Examples of the above adhesives include a silicone adhesive, a modified silicone adhesive, an epoxy adhesive, an acrylic adhesive, a urethane adhesive and a polyester adhesive. One adhesive may be used alone or two or more of them may be used in a mixture.

The undercoat layer is a layer for improving adhesiveness between the adhesive and the molded product or a further member, and may be provided between the adhesive and the molded product or the further member. Substances described in Japanese Patent Laid-Open No. 2022-123848 may be considered as the material constituting the undercoat layer, the content of which is incorporated herein.

The sealing agents, the compositions for sealing and the methods for sealing disclosed in Japanese Patent Laid-Open No. 2021-080363, Japanese Patent Laid-Open No. 2014-062224, Japanese Patent Laid-Open No. 10-305444, Japanese Patent Laid-Open No. 2011-018859, Japanese Patent Laid-Open No. 2001-247746 and Japanese Patent Laid-Open No. 2009-029842 may be preferably used as the sealing agent described above, the content of which is incorporated herein.

In the following, specific examples of preferred configurations of the multilayer body of the present embodiment will be described. Needless to say, the multilayer bodies of the present embodiment are not limited to these.
(1) A multilayer body comprising a molded product formed from a resin composition and a further member, wherein the molded product and the further member are directly bonded in some part.
(2) A multilayer body comprising a molded product formed from a resin composition, an adhesive and a further member, wherein the molded product and the further member are bonded via an adhesive.
(3) A multilayer body comprising a molded product formed from a resin composition, an undercoat layer, an adhesive and a further member, wherein the undercoat layer is provided on at least part of the surface of the molded product, and the undercoat layer and the further member are bonded via an adhesive.
(4) A multilayer body comprising a molded product formed from a resin composition, an adhesive, an undercoat layer and a further member, wherein the undercoat layer is provided on at least part of the surface of the further member, and the undercoat layer and the molded product are bonded via an adhesive.

The multilayer body of the present embodiment does not necessarily require each layer to be flat, sheet-layered, or the like. Needless to say, the multilayer body also includes, for example, those prepared by bonding an injection molded product formed from the resin composition according to the present embodiment and an injection molded product, which is another component, using an adhesive.

It is preferable that in the present embodiment, the molded product formed from the resin composition according to the present embodiment has an arithmetic mean height (Sa) of 1.0 or more in the region to be bonded to a further member. A higher Sa tends to improve adhesiveness between a further member and the like. It is preferable that the above Sa is met in the region of the molded product bonded to a further member, or the above Sa is met on the entire surface of the molded product.

The molded product has an Sa of preferably 0.1 or more, more preferably 0.5 or more, even more preferably 0.6 or more, still more preferably 0.8 or more, and yet more preferably 1.0 or more. The upper limit of the above Sa is preferably 10.0 or less, more preferably 5.0 or less, even more preferably 4.0 or less, still more preferably 3.0 or less, yet more preferably 2.5 or less and further preferably 1.5 or less. When the molded product has an Sa of the upper limit or less, the molded product tends to have improved appearance.

Sa described above is adjusted to 1.0 or more, for example, by mixing an acid-modified polymer (B) to the resin composition according to the present embodiment, mixing a reinforcing filler thereto, or combining the two or more of them.

The arithmetic mean height (Sa) at a site on the surface of the molded product formed from the resin composition, which is to be bonded to a further member, may be calculated by observing the surface with an objective lens on a hybrid laser microscope (OPTELICS HYBRID made by LASERTEC) at a magnification of 10 and measuring the surface using the attached analysis software (Lasertec Microscope Solution Software LMeye7) according to ISO 25178. Details conform to those described in Examples.

Furthermore, the arithmetic mean height (Sa) on the surface of the molded product in the multilayer body may be calculated in the same manner as described above by measuring the surface of the part not bonded to a further member in the molded product. If there is no unbonded part (site), a cross-section of the multilayer body is observed and measured by an optical microscope or a scanning microscope to obtain a value equivalent to the arithmetic mean height (Sa).

In the present embodiment, mold shrinkage of the resin composition can be reduced and warpage of the resulting molded product can be suppressed by mixing an amorphous thermoplastic resin to the resin composition together with a crystalline thermoplastic resin, and/or by using an amorphous thermoplastic resin as the acid-modified polymer.

Hereinafter the resin composition according to the present embodiment will be described in detail.

### <Crystalline thermoplastic resin (A)>

The resin composition according to the present embodiment comprises a crystalline thermoplastic resin. The crystalline resin according to the present embodiment refers to a resin which shows a clear melting point in DSC (differential scanning calorimetry). Resins without any clear melting point are referred to as amorphous thermoplastic resin.

Examples of crystalline thermoplastic resins include a polyamide resin, a polyacetal resin and a crystalline thermoplastic polyester resin. A polyamide resin and a crystalline thermoplastic polyester resin (hereinafter may be simply referred to as a "polyester resin") are preferred, a crystalline thermoplastic polyester resin is more preferred, and a polybutylene terephthalate resin is further preferred.

An acid-modified polymer equivalent to a crystalline thermoplastic resin falls into the category of the acid-modified polymer (B) in the present description.

For details of polyamide resin, see paragraph 0012 to 0022 of Japanese Patent Laid-Open No. 2020-100832, the content of which is incorporated herein.

For details of polyacetal resin, see paragraph 0009 to 0014 of Japanese Patent Laid-Open No. 2021-098767, the content of which is incorporated herein.

The polyester resin is prepared by polycondensation of dicarboxylic acid compound and a dihydroxy compound, polycondensation of oxycarboxylic acid compound, or polycondensation of these compounds. The polyester resin may be any of homopolyester and copolyester.

An aromatic dicarboxylic acid or an ester-forming derivative thereof are preferably used as a dicarboxylic acid compound constituting the polyester resin.

Examples of aromatic dicarboxylic acids include terephthalic acid, isophthalic acid, orthophthalic acid, 1,5-naphthalenedicarboxylic acid, 2,5-naphthalenedicarboxylic acid, 2,6-naphthalenedicarboxylic acid, biphenyl-2,2'-dicarboxylic acid, biphenyl-3,3'-dicarboxylic acid, biphenyl-4,4'-dicarboxylic acid, diphenylether-4,4'-dicarboxylic acid, diphenylmethane-4,4'-dicarboxylic acid, diphenylsulfone-4,4'-dicarboxylic acid, diphenylisopropylidene-4,4'-dicarboxylic acid, 1,2-bis(phenoxy)ethane-4,4'-dicarboxylic acid, anthracene-2,5-dicarboxylic acid, anthracene-2,6-dicarboxylic acid, p-tert-phenylene-4,4'-dicarboxylic acid and pyridine-2,5-dicarboxylic acid, and terephthalic acid is preferably used.

Two or more of these aromatic dicarboxylic acids may be used in a mixture. As is commonly known, they may be used for polycondensation reaction as an ester-forming derivative such as dimethyl ester other than free acid.

A small amount of one or more of an aliphatic dicarboxylic acid such as adipic acid, azelaic acid, dodecanedioic acid and sebacic acid and an alicyclic dicarboxylic acid such as 1,2-cyclohexanedicarboxylic acid, 1,3-cyclohexanedicarboxylic acid and 1,4-cyclohexanedicarboxylic acid may be used in a mixture together with the above aromatic dicarboxylic acid.

Examples of dihydroxy compounds constituting the polyester resin include an aliphatic diol such as ethylene glycol, propylene glycol, butanediol, hexylene glycol, neopentyl glycol, 2-methylproane-1,3-diol, diethylene glycol and triethylene glycol, an alicyclic diol such as cyclohexane-1,4-dimethanol, and a mixture thereof. One or more of a long chain diol having a molecular weight of 400 to 6,000, more specifically, polyethylene glycol, poly-1,3-propyleneglycol and polytetramethylene glycol may be copolymerized in small amounts.

An aromatic diol such as hydroquinone, resorcin, naphthalenediol, dihydroxydiphenyl ether and 2,2-bis(4-hydroxyphenyl)propane may also be used.

In addition to the above bifunctional monomers, a small amount of a trifunctional monomer such as trimellitic acid, trimesic acid, pyromellitic acid, pentaerythritol and trimethylolpropane may also be used in combination in order to introduce a branched structure thereinto, and a monofunctional compound such as fatty acid in order to adjust the molecular weight.

As the polyester resin, a polyester resin composed mainly of a polycondensation product of dicarboxylic acid and diol, more specifically, a polyester resin composed of 50% by mass and preferably 70% by mass or more of the polycondensation product based on the whole polyester resin is usually used. Aromatic carboxylic acid is preferred as dicarboxylic acid. Aliphatic diol is preferred as diol.

Of them, polyalkylene terephthalate in which 95% by mole or more of the acid component is terephthalic acid and 95% by mass or more of the alcohol component is aliphatic diol is preferred. Typical examples thereof include a polybutylene terephthalate resin and a polyethylene terephthalate resin, and a polybutylene terephthalate resin is preferred. Those close to a homopolyester, more specifically those in which a terephthalic acid component and a 1,4-butanediol or ethylene glycol component account for 95% by mass or more of the whole resin are preferred.

Those prepared by copolymerization of isophthalic acid, dimer acid, and polyalkylene glycol such as polytetramethylene glycol (PTMG) are also preferred. Examples of such copolymers include those in which the amount of copolymerization is 1% by mole or more and less than 50% by mole based on the total segments of polyalkylene terephthalate.

The polyester resin has a concentration of the terminal carboxyl group of preferably 1 to 23 eq/ton, and more preferably 7 to 20 eq/ton. In this range flowability tends to be improved.

When the resin composition according to the present embodiment includes two or more polyester resins, the concentration of the terminal carboxyl group in the mixture is regarded as that in the polyester resin. The amount of the terminal carboxyl group may be determined by dissolving 0.5 g of polyester resin in 25 mL of benzyl alcohol and titrating it using a 0.01 mol/L benzyl alcohol solution of sodium hydroxide.

The resin composition according to the present embodiment comprises preferably 30% by mass or more, and preferably 75% by mass or more, and more preferably 70% by mass or less of a crystalline thermoplastic resin (preferably a polyester resin, more preferably a polybutylene terephthalate resin) based on the resin component.

The resin composition according to the present embodiment may include a crystalline thermoplastic resin alone or two or more of them. When the resin composition according to the present embodiment includes two or more crystalline thermoplastic resins, it is preferable that the total amount is in the above range.

### <Acid-modified polymer (B)>

The resin composition according to the present embodiment includes an acid-modified polymer. By including the acid-modified polymer, adhesiveness to further members can be increased.

The acid-modified polymer (B) may be a crystalline resin or an amorphous resin, and is usually an amorphous resin. Use of an amorphous resin achieves low warpage effectively. Furthermore, while the acid-modified polymer may be a thermoplastic resin or a thermosetting resin, the acid-modified polymer is preferably a thermoplastic resin.

Although the acid-modified polymer may comprise only an acid group-containing monomer unit, it is preferable that the acid-modified polymer comprises another monomer unit in addition to the acid group-containing monomer unit. It is preferable that the acid-modified polymer comprises at least one of an aromatic vinyl group-containing monomer unit and an olefin group-containing monomer unit in addition to the acid group-containing monomer unit (preferably a maleic anhydride group-containing monomer unit). It is more preferable that the acid-modified polymer comprises at least one of a styrene group-containing monomer unit and an olefin group-containing monomer unit in addition to the acid group-containing monomer unit. It is further preferred that the acid-modified polymer comprises a styrene group-containing monomer unit in addition to the acid group-containing monomer unit. When a styrene monomer unit is included in addition to the acid-modified monomer unit, not only adhesiveness is increased, but also warpage tends to be significantly reduced.

Examples of aromatic vinyl monomers include styrene, styrene sulfonate such as sodium styrene sulfonate and ammonium styrene sulfonate; styrene sulfonate ester such as ethyl styrene sulfonate; styrene alkyl ether such as t-butoxystyrene; a styrene derivative such as acetoxy styrene and vinylbenzoic acid; α-methylstyrene and an α-methylstyrene derivative. One of them may be used alone or two or more of them may be used in combination.

Examples of olefin monomers include α-olefin such as ethylene and propylene. One of them may be used alone or two or more of them may be used in combination.

The content of the aromatic vinyl monomer unit and/or the olefin monomer is preferably 2% by mass or more and 98% by mass or less in the acid-modified polymer.

The acid-modified polymer may also include another monomer unit in addition to the above units. An acrylic monomer and a maleimide monomer are preferred as other monomers. Examples of acrylic monomers include methyl methacrylate and methyl acrylate. Examples of maleimide monomers include N-methylmaleimide, N-ethylmaleimide, N-cyclohexylmaleimide and N-phenylmaleimide. Examples also include acrylonitrile.

It is preferable that polymer is modified with acid and/or acid anhydride. It is more preferable that polymer is modified with acid anhydride. More specifically, polymer is modified with preferably an organic acid and an acid anhydride thereof, more preferably a carboxylic acid and a carboxylic anhydride, even more preferably maleic acid and maleic anhydride, and still more preferably maleic anhydride.

The proportion of acid modification (the proportion of acid) in the acid-modified polymer is preferably 1% by mass or more, preferably 2% by mass or more and preferably 5% by mass or more, and preferably 50% by mass or less, more preferably 35% by mass or less, and may be 25% by mass or less, and may be 10% by mass or less.

For the content of acid in the acid-modified polymer in the resin composition, solvent is evaporated from a solution prepared by dissolving the resin composition in the solvent in which the resin composition dissolves, and the remaining substance (residue) is dissolved in a heavy solvent for NMR measurement and the acid content is calculated based on the NMR measurement. When acid groups cannot be found in the NMR measurement, the residue is dissolved in a solvent in which the residue is soluble, and an indicator is added thereto to titrate the solution with a basic solvent to calculate the content.

It is preferable that the above solvent in which the resin composition is soluble and the solvent used for NMR measurement are a solvent in which the resin component of the composition is soluble. Examples thereof include, but are not limited to, dichloromethane, methanol and chloroform.

Specific examples of maleic anhydride-modified polymers used in the present embodiment more preferably include at least one of a styrene-maleic anhydride polymer, a styrene-N-phenylmaleimide-maleic anhydride polymer and an α-olefin-maleic anhydride polymer. A styrene-maleic anhydride polymer is even more preferred.

It is preferable that in the acid-modified polymer used in the present embodiment, the sum of the acid group-containing monomer unit, the aromatic vinyl group-containing monomer unit and other monomer units mixed as needed accounts for 100% by mass of all the constituent units excluding terminal groups.

The acid-modified polymer may be an acid-modified impact modifier.

The acid-modified impact modifier that can be used in the present embodiment is at least one acid-modified elastomer made of an acid-modified olefin elastomer and an acid-modified styrenic elastomer.

The olefin elastomer has a polyolefin moiety in the soft phase. Ethylene propylene rubber such as EPR and EPDM may be preferably used.

A preferred styrenic elastomer comprises a styrene component and an elastomer component, wherein the styrene component is usually contained in an amount of 5 to 80% by mass, preferably 10 to 50% by mass, and particularly preferably 15 to 30% by mass. In this regard, examples of elastomer components include a conjugated diene hydrocarbon such as butadiene, isoprene and 1,3-pentadiene, and more specifically a styrenic elastomer such as an elastomer of a styrene butadiene copolymer (SBS) and an elastomer of a styrene isoprene copolymer (SIS).

Acid modification in the acid-modified impact modifier according to the present embodiment means introduction of a cyclic anhydride and/or a carboxylic acid group into the side chain of the copolymer using a cyclic acid anhydride such as maleic anhydride, phthalic anhydride, glutaric anhydride and succinic anhydride.

Acid may be introduced thereinto by a usual method, such as graft copolymerization and random copolymerization.

Examples of acid-modified impact modifiers include "TUFTEC M1913" made by Asahi Kasei Corporation, "LOTADER 4613" made by Arkema and "TAFMER MP0610" made by Mitsui Chemicals, Inc.

The acid-modified polymer has a weight average molecular weight of preferably 50,000 or more, more preferably 80,000 or more, even more preferably 90,000 or more, still more preferably 100,000 or more, and yet more preferably 150,000 or more. By setting the weight average molecular weight to the lower limit or more, compatibility with polyester resin is increased and surface appearance tends to be improved. The acid-modified polymer has a weight average molecular weight of preferably 500,000 or less, more preferably 400,000 or less, even more preferably 300,000 or less, and still more preferably 200,000 or less. By setting the weight average molecular weight to the upper limit or less, a larger amount of acid-modified polymer, and consequently, acid (acid groups), is present on the surface of the resulting molded product, and adhesiveness of the resin composition tends to be improved.

The weight average molecular weight is measured by gel permeation chromatography (GPC) using tetrahydrofuran as a solvent in terms of polystyrene.

When the resin composition according to the present embodiment includes two or more acid-modified polymers, the weight average molecular weight of the mixture is regarded as that of the acid-modified polymer.

The acid-modified polymer according to the present embodiment has an acid value of more than 0 mg KOH/g, preferably 0.5 mg KOH/g or more, even more preferably 2 mg KOH/g or more, still more preferably 5 mg KOH/g or more, yet more preferably 10 mg KOH/g or more, and may be 15 mg KOH/g or more depending on the purpose of use. When the acid-modified polymer has an acid value of the lower limit or more, decomposition of polyester resin may be effectively prevented. The acid-modified polymer has an upper limit of the acid value of preferably 100 mg KOH/g or less, more preferably 90 mg KOH/g or less, even more preferably 80 mg KOH/g or less, and may be 70 mg KOH/g or less, 60 mg KOH/g or less, 50 mg KOH/g or less, 40 mg KOH/g or less or 35 mg KOH/g or less depending on the purpose of use. When the acid-modified polymer has an acid value of the upper limit or less, degradation of mechanical properties of molded products tends to be effectively prevented.

When the resin composition according to the present embodiment includes two or more acid-modified polymers, the acid value of the mixture is regarded as that of the acid-modified polymer.

The content of the acid-modified polymer is smaller than the content of the crystalline thermoplastic resin in the resin composition according to the present embodiment. In other words, the content of the crystalline thermoplastic resin is larger than the content of the acid-modified polymer in the resin composition according to the present embodiment. More specifically, the content of the acid-modified polymer is preferably 1 part by mass or more, more preferably 2 parts by mass or more, and may be 6 parts by mass or more, 10 parts by mass or more, 16 parts by mass or more, or 20 parts by mass or more based on 100 parts by mass of the crystalline thermoplastic resin (preferably a polyester resin, more preferably a polybutylene terephthalate resin). By setting the content to the lower limit or less, a larger amount of maleic acid is present on the surface of the molded product, and the resulting molded product tends to have improved adhesiveness to further members. Furthermore, the upper limit of the content of the acid-modified polymer is preferably 80 parts by mass or less, more preferably 60 parts by mass or less, and may be 45 parts by mass or less or 30 parts by mass or less based on 100 parts by mass of the crystalline thermoplastic resin (preferably a polyester resin, more preferably a polybutylene terephthalate resin). By setting the content to the upper limit or less, heat resistance of the resin composition tends to be improved.

The resin composition according to the present embodiment may include an acid-modified polymer alone or two or more of them. When the resin composition according to the present embodiment includes two or more acid-modified polymers, it is preferable that the total amount is in the above range.

In the present embodiment, the content of acid in the resin composition is 0.5% by mass or more. By setting the content to the lower limit or more, the resulting molded product has excellent adhesiveness to further members. The content of acid in the resin composition is preferably 0.55% by mass or more, more preferably 0.60% by mass or more, even more preferably 0.70% by mass or more, still more preferably 1.0% by mass or more, and yet more preferably 1.4% by mass or more. Furthermore, the upper limit of the content of acid in the resin composition is preferably 10.0% by mass or less, more preferably 8.0% by mass or less, even more preferably 6.0% by mass or less, still more preferably 4.0% by mass or less, yet more preferably 3.0% by mass or less, further preferably 2.5% by mass or less, and even further preferably 2.0% by mass or less. By setting the content to the upper limit or less, basic physical properties and surface appearance of the molded product tend to be improved.

In particular, those in which the content of acid is 1.4% by mass or more and 2.5% by mass or less and which have an arithmetic mean height (Sa) of 1.0 or more and 2.5 or less are preferred, because adhesiveness to further members, basic physical properties and surface appearance of the resin composition are likely to be balanced.

If the content of acid in the acid-modified polymer is known, for example, by measurement and the like, the content of acid in the resin composition may be calculated by multiplying the content of the acid-modified polymer based on 100 parts by mass of the resin composition by the content rate of acid in the acid-modified polymer.

If the content of acid in the acid-modified polymer is unknown, solvent is evaporated from a solution prepared by dissolving the resin composition in the solvent in which the resin composition dissolves, and the remaining substance (residue) is dissolved in a heavy solvent for NMR measurement and the acid content is calculated based on the NMR measurement as described above. When acid groups cannot be found in the NMR measurement, the residue is dissolved in a solvent in which the residue is soluble, an indicator is added thereto to titrate the solution with a basic solvent to calculate the content.

### <Amorphous thermoplastic resin (C) other than acid-modified polymer>

It is preferable that the resin composition according to the present embodiment comprises an amorphous thermoplastic resin (C) other than the acid-modified polymer (B). By including the amorphous thermoplastic resin, warpage of the molded product can be reduced effectively. This may be because the amorphous thermoplastic resin is less likely to shrink at the time of molding compared to crystalline thermoplastic resin. Furthermore, in the present embodiment, if the resin composition includes amorphous thermoplastic resin, moderate irregularities can be easily formed on the surface of the molded product by using chemical and the like, and this improves adhesiveness of the resulting molded product.

Preferred examples of amorphous thermoplastic resins include styrenic resins such as a polystyrene resin, a high impact polystyrene resin (HIPS), a hydrogenated polystyrene resin, a polyacrylic styrene resin, an ABS resin (acrylonitrile butadiene styrene resin), an AS resin (acrylonitrile styrene resin), an AES resin (acrylonitrile ethylene rubber styrene resin) and a ASA resin (acrylonitrile styrene acrylic rubber resin), a polyalkyl methacrylate resin, a (meth)acrylate copolymer, a polymethacrylic methacrylate resin, a polyphenylether resin, a polycarbonate resin, an amorphous polyalkylene terephthalate resin, an amorphous polyester resin, an amorphous polyamide resin, a poly-4-methylpentene-1, a cyclic polyolefin resin, an amorphous polyarylate resin and a polyether sulfone resin. A styrenic resin and a polycarbonate resin are preferred, and a styrenic resin is more preferred. By using a styrenic resin, molding stability and thermal stability are effectively improved.

Of the styrenic resins, a high impact polystyrene resin (HIPS), an ABS resin (acrylonitrile butadiene styrene resin) and an AS resin (acrylonitrile styrene resin) are preferred, and a high impact polystyrene resin (HIPS) and an AS resin (acrylonitrile styrene resin) are more preferred.

The content of the amorphous thermoplastic resin (preferably a styrenic resin) in the resin composition according to the present embodiment is preferably 1 part by mass or more, and may be 5 parts by mass or more, 10 parts by mass or more, 20 parts by mass or more, and 25 parts by mass or more based on 100 parts by mass of the crystalline thermoplastic resin (preferably a polyester resin, more preferably a polybutylene terephthalate resin). By setting the content to the lower limit or more, warpage of the resulting molded product tends to be effectively prevented. Furthermore, the upper limit of the content of the amorphous thermoplastic resin (preferably a styrenic resin) is preferably 90 parts by mass or less, preferably 80 parts by mass or less, preferably 60 parts by mass or less, more preferably 55 parts by mass or less, and may be 45 parts by mass or less based on 100 parts by mass of the crystalline thermoplastic resin (preferably a polyester resin, more preferably a polybutylene terephthalate resin).

The resin composition according to the present embodiment may include an amorphous thermoplastic resin alone or two or more of them. When the resin composition according to the present embodiment includes two or more amorphous thermoplastic resins, it is preferable that the total amount is in the above range.

In the resin composition according to the present embodiment, the total amount of the acid-modified polymer and the amorphous thermoplastic resin is also preferably 35 parts by mass or more, and preferably 90 parts by mass or less, and may be 55 parts by mass or less and 45 parts by mass or less based on 100 parts by mass of the crystalline thermoplastic resin (preferably a polyester resin, more preferably a polybutylene terephthalate resin).

### <Epoxy group-containing compound (D)>

It is preferable that the resin composition according to the present embodiment includes an epoxy group-containing compound. The epoxy group-containing compound can effectively prevent the molecular weight of the crystalline thermoplastic resin, in particular, polybutylene terephthalate resin, from being reduced due to hydrolysis, and prevent mechanical strength and the like from being reduced.

It is preferable that an epoxy group-containing compound having a weight average molecular weight (Mw) of 200 to 10,000 is used. The epoxy group-containing compound has a Mw of preferably 9,000 or less, more preferably 6,000 or less, even more preferably 4,000 or less, especially preferably 2,000 or less, and particularly preferably 1,000 or less.

An epoxy group-containing compound having one or more epoxy groups per molecule may be used. Usually a glycidyl compound, which is a reaction product of alcohol, phenol or carboxylic acid with epichlorohydrin, and a compound prepared by epoxidation of an olefinic double bond may be used as the epoxy group-containing compound.

Examples of epoxy group-containing compounds include a novolac epoxy compound, a bisphenol A epoxy compound, a bisphenol F epoxy compound, an alicyclic epoxy compound, glycidyl ether, glycidyl ester, an epoxidized butadiene polymer and resorcin epoxy compound.

Examples of novolac epoxy compounds include a phenol novolac epoxy compound and cresol novolac epoxy compound. Examples of bisphenol A epoxy compounds include bisphenol A - diglycidyl ether and hydrogenated bisphenol A - diglycidyl ether. Examples of bisphenol F epoxy compounds include bisphenol F - diglycidyl ether and hydrogenated bisphenol F -diglycidyl ether.

Examples of alicyclic epoxy compounds include vinylcyclohexene dioxide, dicyclopentadiene oxide, 3,4-epoxycyclohexyl-3,4-cyclohexylcarboxylate, bis(3,4-epoxycyclohexylmethyl)adipate, vinylcyclohexene diepoxide and 3,4-epoxycyclohexyl glycidyl ether.

Specific examples of glycidyl ethers include monoglycidyl ether such as methyl glycidyl ether, butyl glycidyl ether, 2-ethylhexyl glycidyl ether, decyl glycidyl ether, stearyl glycidyl ether, phenyl glycidyl ether, butyl phenyl glycidyl ether and allyl glycidyl ether; and diglycidyl ether such as neopentyl glycol diglycidyl ether, ethylene glycol diglycidyl ether, glycerol diglycidyl ether, propylene glycol diglycidyl ether and bisphenol A diglycidyl ether.

Examples of glycidyl esters include monoglycidyl ester such as benzoic acid glycidyl ester and sorbic acid glycidyl ester; and diglycidyl ester such as adipic acid diglycidyl ester, terephthalic acid diglycidyl ester and orthophthalic acid diglycidyl ester.

Examples of epoxidized butadiene polymers include epoxidized polybutadiene, an epoxidized styrene-butadiene copolymer, and an epoxidized hydrogenated styrene-butadiene copolymer.

Examples of resorcin epoxy compounds include resorcin diglycidyl ether.

The epoxy group-containing compound may be a copolymer in which one component is a glycidyl group-containing compound. Examples thereof include a copolymer of glycidyl ester of α,β-unsaturated acid and one or more monomers selected from α-olefin, acrylic acid, acrylic acid ester, methacrylic acid and methacrylic acid ester.

It is preferable that the epoxy group-containing compound has an epoxy equivalent of 150 to 1,000 g/eq. By setting the epoxy equivalent to 150 g/eq or more, the viscosity of the resin composition can be moderately reduced. By setting the epoxy equivalent to 1,000 g/eq or less, the amount of the epoxy group is reduced, and thus polybutylene terephthalate resin tends to have improved resistance to hydrolysis. The epoxy group-containing compound has an epoxy equivalent of more preferably 160 to 800 g/eq, even more preferably 170 to 700 g/eq, and still more preferably 180 to 650 g/eq.

A bisphenol A epoxy compound resulting from the reaction between bisphenol A or novolac and epichlorohydrin, and a novolac epoxy compound are particularly preferred as the epoxy group-containing compound because hydrolysis resistance, alkaline resistance and surface appearance of the molded product are likely to be improved.

When the resin composition according to the present embodiment includes the epoxy group-containing compound, the content of the epoxy group-containing compound is preferably 0.1 part by mass or more, more preferably 0.15 part by mass or more, even more preferably 0.2 part by mass or more, still more preferably 0.25 part by mass or more based on 100 parts by mass of the crystalline thermoplastic resin (preferably a polyester resin, more preferably a polybutylene terephthalate resin). By setting the content to the lower limit or more, hydrolysis resistance of the resulting molded product tends to be improved. The upper limit of the content of the epoxy group-containing compound is preferably 4 parts by mass or less, more preferably 3 parts by mass or less, even more preferably 2 parts by mass or less, still more preferably 1 part by mass or less based on 100 parts by mass of the crystalline thermoplastic resin (preferably a polyester resin, more preferably a polybutylene terephthalate resin). By setting the content to the upper limit or less, flowability of the resin composition tends to be improved.

The resin composition according to the present embodiment may include an epoxy group-containing compound alone or two or more of them. When the resin composition according to the present embodiment includes two or more epoxy group-containing compounds, it is preferable that the total amount is in the above range.

### <Release agent (E)>

It is preferable that the resin composition according to the present embodiment includes a release agent.

A wide variety of known release agents may be used as the release agent, and low molecular polyolefin and an esterified compound of aliphatic carboxylic acid are preferred. Examples of low molecular weight polyolefins include those having a weight average molecular weight of, for example, 10,000 or less, preferably 5,000 or less, and more preferably 1,000 or less. It is preferable that the esterified compound of aliphatic carboxylic acid is a compound resulting from esterification of polyhydric alcohol and an aliphatic carboxylic acid having 10 to 19 carbon atoms.

For specific examples of release agents, see paragraphs 0063 to 0077 of Japanese Patent Laid-Open No. 2018-070722 and paragraphs 0090 to 0098 of Japanese Patent Laid-Open No. 2019-123809, the content of which is incorporated herein.

When the resin composition according to the present embodiment includes a release agent, the content of the release agent is preferably 0.01 part by mass or more, more preferably 0.08 part by mass or more and even more preferably 0.2 part by mass or more based on 100 parts by mass of the crystalline thermoplastic resin (preferably a polyester resin, more preferably a polybutylene terephthalate resin). The upper limit of the content of the release agent is preferably 5 parts by mass or less, more preferably 3 parts by mass or less, even more preferably 2 parts by mass or less, still more preferably 1 part by mass or less, and yet more preferably 0.8 part by mass or less based on 100 parts by mass of the crystalline thermoplastic resin (preferably a polyester resin, more preferably a polybutylene terephthalate resin).

The resin composition according to the present embodiment may include a release agent alone or two or more of them. When the resin composition according to the present embodiment includes two or more release agents, it is preferable that the total amount is in the above range.

### <Impact modifier (F)>

It is preferable that the resin composition according to the present embodiment includes an impact modifier. By including the impact modifier, the impact resistance of the resin composition can be improved.

A graft copolymer prepared by graft copolymerization of a rubber component and a monomer component copolymerizable therewith is preferred as the impact modifier that can be used in the present embodiment. Any method of bulk polymerization, solution polymerization, suspension polymerization and emulsion polymerization may be used as the method for producing the graft copolymer. The system of copolymerization may be any of single grafting and multiple grafting.

An acid-modified impact modifier is regarded as the acid-modified polymer (B) in the present description.

The rubber component has a glass transition temperature of usually 0°C or less, preferably -20°C or less, more preferably -30°C or less. Specific examples of rubber components include a polyalkyl acrylate rubber such as polybutadiene rubber, polyisoprene rubber, polybutyl acrylate, poly(2-ethylhexylacrylate) and butyl acrylate · 2-ethylhexyl acrylate copolymer, a silicone rubber such as polyorganosiloxane rubber, butadiene-acrylic composite rubber, IPN (Interpenetrating Polymer Network) composite rubber composed of polyorganosiloxane rubber and polyalkyl acrylate rubber, styrene-butadiene rubber, an ethylene-α-olefin rubber such as an ethylene-propylene rubber, an ethylene-butene rubber and an ethylene-octene rubber, an ethylene-acrylic rubber and a fluorine rubber. These may be used alone or two or more of them may be used in combination. Of them, polybutadiene rubber, polyalkyl acrylate rubber, polyorganosiloxane rubber, an IPN composite rubber composed of polyorganosiloxane rubber and polyalkyl acrylate rubber, and a styrene-butadiene rubber are preferred from the viewpoint of mechanical properties and surface appearance.

It is preferable that the graft copolymer prepared by copolymerization of a rubber component is a core-shell elastomer from the viewpoint of impact resistance and surface appearance. In particular, a core-shell elastomer with a core layer of at least one rubber component selected from polybutadiene-containing rubber, polybutyl acrylate-containing rubber, polyorganosiloxane rubber and IPN composite rubber composed of polyorganosiloxane rubber and polyalkyl acrylate rubber and a shell layer formed by copolymerization of (meth)acrylic acid ester therearound is particularly preferred. A core-shell elastomer containing 40% by mass or more of a rubber component is preferred, and a core-shell elastomer containing 60% by mass or more of a rubber component is more preferred. A core-shell elastomer containing 10% by mass or more of (meth)acrylic acid is also preferred. The core-shell elastomer according to the present embodiment may be those in which the core layer and the shell layer are not clearly distinguished, and the core-shell elastomer includes a wide variety of compounds prepared by graft polymerizing a rubber component around the part which is the core.

Preferred examples of core-shell elastomers include methyl methacrylate-butadiene-styrene copolymer (MBS), methyl methacrylate-acrylonitrile-butadiene-styrene copolymer (MABS), methyl methacrylate-butadiene copolymer (MB), methyl methacrylate-acrylic rubber copolymer (MA), methyl methacrylate-acrylic rubber-styrene copolymer (MAS), methyl methacrylate-acrylic-butadiene rubber copolymer, methyl methacrylate-acrylic-butadiene rubber-styrene copolymer and methyl methacrylate-(acryl-silicone IPN rubber) copolymer.

Examples of such impact modifiers include "PARALOID (registered trademark, same below) EXL2602," "PARALOID EXL2603," "PARALOID EXL2655," "PARALOID EXL2311," "PARALOID EXL2313," "PARALOID EXL2315," "PARALOID KM330," "PARALOID KM336P" and "PARALOID KCZ201" made by Rohm and Haas Japan, "METABLEN (registered trademark, same below) C-223A," "METABLEN E-901," "METABLEN S-2001" and "METABLEN SRK-200" made by Mitsubishi Rayon Co., Ltd., "Kane Ace (registered trademark, same below) M-511," "Kane Ace M-600," "Kane Ace M-400," "Kane Ace M-580," "Kane Ace M-711" and "Kane Ace MR-01" made by Kaneka Corporation and "UBESTA XPA" made by UBE Corporation.

When the resin composition according to the present embodiment includes an impact modifier, the content is preferably 1 part by mass or more, more preferably 5 parts by mass or more, even more preferably 8 parts by mass or more, still more preferably 10 parts by mass or more, and yet more preferably 12 parts by mass or more based on 100 parts by mass of the crystalline thermoplastic resin (preferably a polyester resin, more preferably a polybutylene terephthalate resin). By setting the content to the lower limit or more, impact resistance of the resulting molded product tends to be improved. The upper limit of the content of the impact modifier is preferably 30 parts by mass or less, more preferably 28 parts by mass or less, even more preferably 26 parts by mass or less, still more preferably 24 parts by mass or less, and yet more preferably 22 parts by mass or less based on 100 parts by mass of the crystalline thermoplastic resin (preferably a polyester resin, more preferably a polybutylene terephthalate resin). By setting the content to the upper limit or less, flowability of the resin composition tends to be improved.

The resin composition according to the present embodiment may include an impact modifier alone or two or more of them. When the resin composition according to the present embodiment includes two or more impact modifies, it is preferable that the total amount is in the above range.

### <Stabilizer (G)>

The resin composition according to the present embodiment may include a stabilizer.

Examples of stabilizers include a hindered phenol compound, a hindered amine compound, a phosphorus compound and a sulfur stabilizer. Of them, a phosphorus compound is preferred.

For specific examples of stabilizers, see paragraphs 0067 to 0075 in Japanese Patent Laid-Open No. 2021-063196, paragraphs 0046 to 0057 in Japanese Patent Laid-Open No. 2018-070722, paragraphs 0030 to 0037 in Japanese Patent Laid-Open No. 2019-056035, and paragraphs 0066 to 0078 in International Publication No. 2017/038949, the content of which is incorporated herein.

When the resin composition according to the present embodiment includes a stabilizer, the content of the stabilizer is preferably 0.01 part by mass or more, more preferably 0.05 part by mass or more and even more preferably 0.08 part by mass or more based on 100 parts by mass of the crystalline thermoplastic resin (preferably a polyester resin, more preferably a polybutylene terephthalate resin). The upper limit of the content of the stabilizer is preferably 3 parts by mass or less, more preferably 1 part by mass or less, even more preferably 0.5 part by mass or less, and still more preferably 0.3 part by mass or less based on 100 parts by mass of the crystalline thermoplastic resin (preferably a polyester resin, more preferably a polybutylene terephthalate resin).

The resin composition according to the present embodiment may include a stabilizer alone or two or more of them. When the resin composition according to the present embodiment includes two or more stabilizers, it is preferable that the total amount is in the above range.

### <Colorant (H)>

The resin composition according to the present embodiment may include a colorant. The colorant may be a dye or a pigment, and is preferably a pigment.

Any of an organic colorant and an inorganic colorant may be used as the colorant. Furthermore, any of a chromatic colorant and an achromatic colorant may be used.

Examples of colorants include those described in paragraphs 0121 to 0123 in Japanese Patent Laid-Open No. 2021-101020 and paragraphs 0088 to 0090 in Japanese Patent Laid-Open No. 2019-188393, the content of which is incorporated herein.

It is preferable that the resin composition according to the present embodiment includes carbon black. The type and raw materials of carbon black and the method for producing carbon black are not limited. Any of furnace black, channel black, acetylene black and Ketjen black may be used. The number average particle size of carbon black is not particularly limited. It is preferable that carbon black has a number average particle size of about 5 to 60 nm.

It is preferable that carbon black is mixed with a thermoplastic resin in the form of a master batch in which carbon black is previously mixed with the thermoplastic resin, preferably a polyethylene terephthalate.

When the resin composition according to the present embodiment includes a colorant (preferably carbon black), the content of the colorant is preferably 0.01 part by mass or more, more preferably 0.05 part by mass or more, and even more preferably 0.1 part by mass or more based on 100 parts by mass of the crystalline thermoplastic resin (preferably a polyester resin, more preferably a polybutylene terephthalate resin). By setting the content to the lower limit or more, coloring is more effectively achieved. The upper limit of the content of the colorant is preferably 4 parts by mass or less, more preferably 3 parts by mass or less, even more preferably 2 parts by mass or less, and still more preferably 1 part by mass or less based on 100 parts by mass of the crystalline thermoplastic resin (preferably a polyester resin, more preferably a polybutylene terephthalate resin). By setting the content to the upper limit or less, mechanical properties of the resulting molded product tend to be improved.

The resin composition according to the present embodiment may include a colorant alone or two or more of them. When the resin composition according to the present embodiment includes two or more colorants, it is preferable that the total amount is in the above range.

### <Reinforcing filler (I)>

It is preferable that the resin composition according to the present embodiment includes a reinforcing filler. By including a reinforcing filler, mechanical strength of the resulting molded product can be increased.

The type and the like of the reinforcing filler is not particularly limited. Any of fiber, filler and beads may be used, and fiber is preferred.

When the reinforcing filler is fiber, the fiber may be short fiber or long fiber.

Examples of raw materials of the reinforcing filler include an inorganic substance such as glass, carbon (e.g., carbon fiber), alumina, boron, ceramic and metal (e.g., steel) and an organic substance such as plant (including kenaf and bamboo), aramid, polyoxymethylene, aromatic polyamide, poly p-phenylenebenzobisoxazole and ultra high molecular weight polyethylene, and glass is preferred.

It is preferable that the resin composition according to the present embodiment includes glass fiber as a reinforcing filler.

The glass fiber is selected from a glass composition such as A glass, C glass, E glass, R glass, D glass, M glass and S glass, and E glass (non alkali glass) is particularly preferred.

Glass fiber refers to a fibrous material whose cross section obtained by cutting perpendicularly to the length direction is a perfect circle or a polygon. For the glass fiber, the monofilament has a number average fiber diameter of usually 1 to 25 µm, and preferably 5 to 17 µm. By setting the number average fiber diameter to 1 µm or more, molding processability of the resin composition tends to be improved. By setting the number average fiber diameter to 25 µm or less, the appearance of the resulting structure tends to be improved and reinforcing effects tend to be increased. The glass fiber may be composed of a monofilament, or a plurality of monofilaments interlaced with each other.

The form of the glass fiber may be any of glass robing made of a monofilament or a plurality of monofilaments interlaced and continuously wound up, chopped strand trimmed in a length of 1 to 10 mm (i.e., glass fiber having a number average fiber length of 1 to 10 mm) and milled fiber pulverized to have a length of about 10 to 500 µm (i.e., glass fiber having a number average fiber length of 10 to 500 µm). Chopped strand trimmed in a length of 1 to 10 mm is preferred. Glass fibers in a different form may be used in combination.

Glass fiber having an irregular cross section is also preferred. The irregular cross section has an oblateness of, for example, 1.5 to 10, preferably 2.5 to 10, more preferably 2.5 to 8, and particularly preferably 2.5 to 5, which is represented by the ratio of major axis/ minor axis in a cross section perpendicular to the length direction of the fiber.

The glass fiber may be surface-treated or oxidized with, for example, a silane compound, an epoxy compound or a urethane compound in order to improve compatibility with the resin component as long as the properties of the resin composition according to the present embodiment are not significantly impaired.

The resin composition according to the present embodiment includes preferably 10 parts by mass or more, more preferably 20 parts by mass or more, even more preferably 35 parts by mass or more, still more preferably 45 parts by mass or more, and yet more preferably 55 parts by mass or more of a reinforcing filler (preferably glass fiber) based on 100 parts by mass of the crystalline thermoplastic resin (preferably a polyester resin, more preferably a polybutylene terephthalate resin). By setting the content to the lower limit or more, mechanical strength of the resulting molded product tends to be improved. The content of the reinforcing filler (preferably glass fiber) is preferably 300 parts by mass or less, more preferably 270 parts by mass or less, even more preferably 250 parts by mass or less, still more preferably 200 parts by mass or less, yet more preferably 170 parts by mass or less, further preferably 150 parts by mass or less, even further preferably 100 parts by mass or less, still further preferably 90 parts by mass, and yet further preferably 80 parts by mass or less based on 100 parts by mass of the crystalline thermoplastic resin (preferably a polyester resin, more preferably a polybutylene terephthalate resin). By setting the content to the upper limit or less, the resulting molded product tends to have improved appearance.

The content of the reinforcing filler (preferably glass fiber) in the resin composition according to the present embodiment is preferably 10% by mass or more, more preferably 15% by mass or more, even more preferably 20% by mass or more, and still more preferably 25% by mass or more based on the resin composition. Furthermore, the content of the reinforcing filler (preferably glass fiber) is preferably 60% by mass or less, more preferably 55% by mass or less, even more preferably 45% by mass or less, still more preferably 40% by mass or less, and yet more preferably 35% by mass or less based on the resin composition. By setting the content to the lower limit or more, mechanical strength tends to be improved. By setting the content to the upper limit or less, the resulting molded product tends to have improved appearance.

The resin composition according to the present embodiment may include a reinforcing filler (preferably glass fiber) alone or two or more of them. When the resin composition according to the present embodiment includes two or more reinforcing fillers, it is preferable that the total amount is in the above range.

### <Flame retardant (J)>

The resin composition according to the present embodiment may include a flame retardant. By including a flame retardant, adhesiveness of the molded product formed from the resin composition to further members can be improved. When a flame retardant is mixed to the composition, a region composed of the flame retardant is considered to be formed on the surface of the molded product to increase arithmetic average roughness (Sa) and improve adhesiveness.

Examples of flame retardants include a bromine flame retardant and a phosphorus flame retardant, and a bromine flame retardant is preferred. In particular, a brominated epoxy compound is preferred.

Examples of bromine flame retardants include brominated polycarbonate resin, brominated phenoxy resin, brominated polyphenylene ether resin, brominated polystyrene resin, brominated acrylate resin, brominated epoxy compound and brominated imide (e.g., brominated phthalimide).

Brominated polycarbonate derived from brominated bisphenol A, more specifically tetrabromobisphenol A is preferred as the brominated polycarbonate resin. Examples of their terminal structures include a phenyl group, a 4-t-butylphenyl group and a 2,4,6-tribromophenyl group. Those having a 2,4,6-tribromophenyl group as the structure of the terminal group are particularly preferred.

Examples of brominated acrylate resins include pentabromobenzyl acrylate, tetrabromobenzyl acrylate, tribromobenzyl acrylate alone, and a polymer of a mixture thereof. In particular, a polymer prepared by polymerizing benzyl (meth)acrylate having a bromine atom alone, a polymer prepared by copolymerizing two or more thereof, and a polymer prepared by copolymerizing it with another vinyl monomer are preferred. It is preferable that the bromine atom is added to the benzene ring, and the number of bromine atoms added is 1 to 5 atoms, particularly 4 or 5 atoms per benzene ring.

Specific examples of brominated epoxy compounds include a bisphenol A brominated epoxy compound, which is typically a tetrabromobisphenol A epoxy compound.

The molecular weight of the brominated epoxy compound is optional and may be suitably selected and determined. The brominated epoxy compound has a weight average molecular weight (Mw) of, for example, 10,000 or more, preferably 15,000 or more, more preferably 18,000 or more, even more preferably 20,000 or more, and particularly preferably 22,000 or more. The brominated epoxy compound has a weight average molecular weight (Mw) of, for example, 100,000, preferably 80,000 or less, more preferably 78,000 or less, even more preferably 75,000 or less, and particularly preferably 70,000 or less.

The brominated epoxy compound has an epoxy equivalent of preferably 1,000 g/eq or more, more preferably 2,000 g/eq or more, particularly preferably 3,000 g/eq or more, and preferably 40,000 g/eq or less, more preferably 35,000 g/eq or less, and particularly preferably 30,000 g/eq or less.

Examples of phosphorus flame retardants include a metal salt of (di)phosphinic acid such as aluminum ethylphosphinate, aluminum diethylphosphinate, aluminum ethylmethylphosphinate and zinc diethylphosphinate, a reaction product of melamine and phosphoric acid which is typically melamine polyphosphate, phosphoric acid ester, and phosphazene such as cyclic phenoxy phosphazene, chain phenoxy phosphazene and crosslinked phenoxy phosphazene. Of them, a metal salt of (di)phosphinic acid, melamine polyphosphate and phosphazene are preferred because they have excellent thermal stability.

For the flame retardant, see paragraphs 0068 to 0075 of Japanese Patent Laid-Open No. 2016-216534 in addition to the above, the content of which is incorporated herein.

When the resin composition according to the present embodiment includes a flame retardant, the content is preferably 5 parts by mass or more, more preferably 10 parts by mass or more, even more preferably 15 parts by mass or more, still more preferably 20 parts by mass or more, yet more preferably 25 parts by mass or more, further preferably 30 parts by mass or more, and even further preferably 35 parts by mass or more based on 100 parts by mass of the polybutylene terephthalate resin. By setting the content to the lower limit or more, adhesiveness of the molded product formed from the resin composition to further members tends to be improved. The upper limit is preferably 100 parts by mass or less, more preferably 80 parts by mass or less, even more preferably 70 parts by mass or less, still more preferably 60 parts by mass or less and yet more preferably 50 parts by mass or less based on 100 parts by mass of the polybutylene terephthalate resin.

When the resin composition according to the present embodiment includes a flame retardant, the resin composition may include a flame retardant alone or two or more of them. When the resin composition according to the present embodiment includes two or more flame retardants, it is preferable that the total amount is in the above range.

### <Anti-dripping agent (K)>

It is preferable that the resin composition according to the present embodiment includes an anti-dripping agent (K). A fluoropolymer is preferred as the anti-dripping agent (K).

While a known fluorine-containing polymer may be optionally selected and used as the fluoropolymer, a fluoroolefin resin is particularly preferred.

Examples of fluoroolefin resins include a polymer and a copolymer having a fluoroethylene structure. Specific examples thereof include a difluoroethylene resin, a tetrafluoroethylene resin and a tetrafluoroethylene/hexafluoropropylene copolymer resin. Of them, tetrafluoroethylene resin and the like are preferred. A fluoroethylene resin capable of forming fibril is preferred as the fluoroethylene resin.

Examples of fluoroethylene resins capable of forming fibril include Teflon (registered trademark) 6J made by DuPont Mitsui Fluoro Chemicals, and Polyflon (registered trademark) F201L and Polyflon F103 made by Daikin Industries, Ltd.

Furthermore, examples of an aqueous dispersion of a fluoroethylene resin include Teflon (registered trademark) 30J made by DuPont Mitsui Fluoro Chemicals, Fluon D-1, M12 made by Daikin Industries, Ltd. and TF1750 made by Sumitomo 3M Limited. Furthermore, a fluoroethylene polymer having a multilayer structure which is prepared by polymerization of a vinyl monomer may also be used as the fluoropolymer. Specific examples thereof include METABLEN (registered trademark) A-3800 made by Mitsubishi Rayon Co., Ltd.

When the resin composition according to the present embodiment includes an anti-dripping agent (K), the content of the anti-dripping agent is preferably 0.01 part by mass or more, more preferably 0.1 part by mass or more, even more preferably 1 part by mass or more and still more preferably 1.5 parts by mass or more based on 100 parts by mass of the polybutylene terephthalate resin. By setting the content to the lower limit or more, adhesiveness of the molded product formed from the resin composition to further members tends to be improved. The upper limit is preferably 5 parts by mass or less, more preferably 4 parts by mass or less, even more preferably 3 parts by mass or less, still more preferably 2.5 parts by mass or less and yet more preferably 2 parts by mass or less based on 100 parts by mass of the polybutylene terephthalate resin.

The resin composition according to the present embodiment may include an anti-dripping agent (K) alone or two or more of them. When the resin composition according to the present embodiment includes two or more anti-dripping agents, it is preferable that the total amount is in the above range.

### <Antimony trioxide (L)>

The resin composition according to the present embodiment may include antimony trioxide (L). Examples of antimony compounds include antimony trioxide (Sb₂O₃), antimony pentoxide (SbzOs) and sodium antimonate. In the present embodiment, it is preferred to include antimony trioxide from the viewpoint of improvement in flame retardancy and adhesiveness.

Antimony trioxide (L) is mixed to the resin composition so that the total mass ratio of the bromine atoms derived from the bromine flame retardant (J) and the antimony atoms in antimony trioxide (L) in the resin composition is preferably 3% by mass or more, more preferably 4% by mass or more and even more preferably 10% by mass or more, and preferably 25% by mass or less, more preferably 22% by mass or less, and even more preferably 20% by mass or less. By setting the total mass ratio to the lower limit or more, sufficient flame retardancy tends to be achieved. By setting the total mass ratio to the upper limit or less, mechanical strength of the resulting multilayer body tend to be improved. The mass ratio of bromine atoms to antimony atoms (Br/Sb) is preferably 0.3 or more, and preferably 5 or less, and more preferably 4 or less. This range is preferred because flame retardancy tends to be easily achieved.

It is preferable that in the present embodiment antimony trioxide (L) previously included in master batch is used. It is more preferable that antimony trioxide (L) is mixed with the crystalline thermoplastic resin (A) to form master batch. This improves thermal stability in melt kneading and mold processing, suppresses reduction in impact resistance, and tends to reduce unevenness in flame retardancy and impact resistance.

It is preferable that the content of antimony trioxide (L) in the master batch is 20% by mass or more and 90% by mass or less. By setting the content of antimony trioxide (L) to 20% by mass or more, the proportion of the antimony compound in the master batch of flame retardant is sufficient, and flame retardancy is effectively achieved. Meanwhile, a content of antimony trioxide (L) of 90% by mass or less improves dispersibility of antimony trioxide (L) and makes flame retardancy of the resin composition unstable, and improves workability in the production of master batch. This stabilizes strands and makes them less likely to be broken when, for example, extruder is used for production.

The content of antimony trioxide (L) in master batch is preferably 30% by mass or more and 85% by mass or less.

When the resin composition according to the present embodiment includes antimony trioxide (L), the content is preferably 1 part by mass or more, more preferably 5 parts by mass or more, even more preferably 8 parts by mass or more and still more preferably 10 parts by mass or more based on 100 parts by mass of the crystalline thermoplastic resin (A). By setting the content to the lower limit or more, adhesiveness of the molded product formed from the resin composition to further members tends to be improved. The upper limit is preferably 100 parts by mass or less, more preferably 60 parts by mass or less, even more preferably 30 parts by mass or less, still more preferably 20 parts by mass or less, and yet more preferably 18 parts by mass or less based on 100 parts by mass of the crystalline thermoplastic resin.

The resin composition according to the present embodiment may include an antimony trioxide (L) alone or two or more of them. When the resin composition according to the present embodiment includes two or more antimony trioxides, it is preferable that the total amount is in the above range.

### <Other components>

The resin composition according to the present embodiment may include other components in addition to the above components if necessary, as long as the desired properties are not significantly impaired. Examples of other components include various resin additives.

Examples of resin additives include an antioxidant, an ultraviolet absorber, an antistatic agent, a flame retardant aid, an anti-fogging agent, an anti-blocking agent, a flowability improver, a plasticizer, a dispersant and an antibacterial agent. One resin additive may be added to the resin composition alone or two or more of them in any combination at any ratio may be added thereto.

For the antistatic agent, see paragraphs 0063 to 0067 of Japanese Patent Laid-Open No. 2016-216534, the content of which is incorporated herein.

The total amount of the crystalline thermoplastic resin (A), the acid-modified polymer (B) and the amorphous thermoplastic resin (C) accounts for preferably 40% by mass or more, more preferably 50% by mass or more, and even more preferably 55% by mass or more of the resin composition according to the present embodiment. The upper limit is preferably 90% by mass or less, and may be 85% by mass or less.

The total amount of the crystalline thermoplastic resin (A), the acid-modified polymer (B), another amorphous thermoplastic resin (C), the epoxy group-containing compound (D), the release agent (E), the impact modifier (F), the stabilizer (G), the colorant (H), the reinforcing filler (I), the flame retardant (J), the anti-dripping agent (K) and antimony trioxide (L) accounts for preferably 95% by mass or more, and more preferably 98% by mass or more of the resin composition according to the present embodiment. The upper limit may be 100% by mass.

In the resin composition according to the present embodiment, the total amount of the crystalline thermoplastic resin (A), the acid-modified polymer (B) and another amorphous thermoplastic resin (C), and other components added if necessary is adjusted to 100% by mass.

### <Properties of resin composition>

When the resin composition according to the present embodiment is molded into a disc having a diameter of 100 mm and a thickness of 1.6 mm, the disc has warpage of preferably less than 5 mm, and more preferably less than 3 mm. The lower limit of the warpage is optimally 0 mm, and practically 0.01 mm or more. This low warpage is achieved by mixing amorphous thermoplastic resin.

The warpage is measured by the method described in Examples shown later.

### <Method for producing resin composition>

The method for producing the resin composition according to the present embodiment is not limited, and a wide variety of known methods may be used. Examples thereof include a method in which the crystalline thermoplastic resin (A), the acid-modified polymer (B), and if necessary other components are previously mixed using, for example, a mixer such as a tumbler and a Henschel mixer, and then the mixture is melt-kneaded by a mixer such as a Banbury mixer, a roll, a brabender, a single screw kneading extruder, a twin screw kneading extruder and a kneader. The temperature of melt kneading is not particularly limited, and is usually 220 to 320°C.

### <Molded product>

The above resin composition (e.g., pellets) is molded into a molded product by various methods. In other words, the molded product according to the present embodiment is molded from the resin composition according to the present embodiment as described above. The shape of the molded product is not particularly limited, and may be selected depending on the application and intended purposes. Examples thereof include a film, a rod, a cylinder, a ring, a disc, an eclipse, a polygon, an irregular shape, a hollow article, a frame, a box, a panel and a button. In particular, a film, a frame a panel and a button are preferred. The molded product has a thickness of about 1 mm to 5 mm when for example, the molded product is in the form of a frame or a panel.

The method for molding molded products is not particularly limited, and a known molding method may be used. Examples thereof include injection molding, injection compression molding, extrusion molding, profile extrusion, transfer molding, blow molding, gas assisted blow molding, blow molding, extrusion blow molding, IMC (in-mold coating) molding, rotational molding, multilayer molding, two color molding, insert molding, sandwich molding, foam molding and pressure molding. The resin composition according to the present embodiment is particularly suitable for molded products prepared by injection molding, injection compression molding and extrusion molding. The mold temperature in mold molding, for example, injection molding, is preferably 40 to 130°C. A low mold temperature increases arithmetic mean height and improves adhesion strength, but tends to cause poor appearance. A high mold temperature reduces arithmetic mean height and improves appearance, but tends to reduce adhesive strength. The mold temperature is preferably about 60 to 100°C, and in that range adhesion strength and appearance can be effectively improved. Needless to say, however, the resin composition according to the present embodiment is not limited to the molded products prepared by the above methods.

### Examples

Hereinafter the present invention will be described in more detail with reference to Examples. The material, the amount of use, the proportion, details of treatment and the procedure of the treatment may be modified without departing from the spirit of the invention. Thus, the scope of the present invention is not limited to the following specific examples.

If the measurement apparatus and the like used in Examples are unavailable because they are discontinued, other devices with similar performance may be used for the measurement.

### 1. Raw materials

The raw materials shown in the following Table 1 and Table 2 were used.

**[Table 1]**

| Component | Abbreviation | |
|---|---|---|
| (A) Crystalline thermoplastic resin | A1 | Polybutylene terephthalate resin NOVADURAN 5008 made by Mitsubishi Engineering-Plastics Corporation, intrinsic gravity: 0.85 dL/g, content of terminal carboxyl group: 12 eq/ton |
| (B) Acid-modified polymer | B1 | Styrene - maleic anhydride copolymer |
| | | Mw: 177,900, maleic acid content: 8% by mass |
| | | product name: XIRAN SZ08250 made by Polyscope |
| | B2 | Styrene - maleic anhydride copolymer |
| | | Mw: 135,100, maleic acid content: 15% by mass |
| | | product name: XIRAN SZ15170 made by Polyscope |
| | B3 | Styrene - maleic anhydride copolymer |
| | | Mw: 93,800, maleic acid content: 28% by mass |
| | | product name: XIRAN SZ28110 made by Polyscope |
| | B4 | α-olefin - maleic anhydride copolymer |
| | | maleic acid content: 20% by mass |
| | | product name: DIACARNA 30M made by Mitsubishi Chemical Corporation |
| | B5 | Styrene - N-phenylmaleimide - maleic anhydride copolymer |
| | | maleic acid content: 15% by mass or less product name Denka IP MS-NIP made by Denka Company Limited |
| (C) Amorphous resin | C1 | Acrylonitrile styrene resin, MFR (200°C/49 N): 1.0 g/10 min, product name: |
| | | GR-AT-R made by Denka Company Limited |
| | C2 | High impact polystyrene resin, MFR (200°C/ 5 kgf): 3.0 g/10 min, product name HT478 made by PS Japan Corporation |
| (D) Epoxy group-containing compound | D1 | Bisphenol A epoxy compound |
| | | Mw = 370, epoxy equivalent: 194 g/eq |
| | | product name: ADK CIZER EP-17 made by ADEKA Corporation |

**[Table 2]**

| Component | Abbreviation | |
|---|---|---|
| (E) Release agent | E1 | Low molecular weight polyolefin, Mw = 900 |
| | | product name: Hi-WAX 100P made by Mitsui Chemicals, Inc., melting point: 116°C |
| | E2 | Pentaerythritol distearate, melting point: 53°C |
| | | product name: UNISTER H476D made by NOF Corporation |
| (F) Impact modifier | F1 | Acrylic core-shell rubber (core-shell elastomer) |
| | | product name: PARALOID made by Dow |
| (G) Stabilizer | G1 | Pentaerythritol tetrakis[3-(3,5-di-tert-butyl-4-hydroxyphenyl)propionate] |
| | | product name: ADK STAB AO-60 made by ADEKA Corporation |
| (H) Colorant | H1 | Carbon black 19% by mass PBT master batch |
| | | product name: #650B made by Mitsubishi Chemical Corporation average particle size 22 nm, nitrogen adsorption specific surface area 124 m²/g |
| (I) Reinforcing filler | I1 | Glass fiber, product name: T-127 made by Nippon Electric Glass Co., Ltd., chopped strand glass fiber with average fiber diameter of 13 µm treated with novolac epoxy resin |
| | I2 | Flat glass, product name: 3PA-830S made by Nitto Boseki Co., Ltd., Flat glass fiber with average fiber diameter of short side of 7 µm and long side of 28 µm treated with silane compound |
| (J) Flame retardant | J1 | Tetrabromobisphenol A epoxy compound product name CXB-2000H made by Woojin, starting temperature of thermal decomposition: 373°C |
| (K) Anti-dripping agent | K1 | Polytetrafluoroethylene "M12" made by Daikin Industries, Ltd., critical surface tension: 18.5 mN/m |
| (L) Antimony trioxide | L1 | Antimony trioxide master batch polybutylene terephthalate base/Sb₂O₃ concentration = 80% |

### 2. Examples 1 to 19, Comparative Examples 1 to 3

### <Compound>

The respective components shown in Table 1 and Table 2 excluding the reinforcing filler were mixed by a tumbler mixer at a proportion (all in part(s) by mass) shown in Table 3-1 to Table 6-2 until homogeneous. Then the reinforcing filler was supplied from the side feeder and the mixture was melt-kneaded using a twin-screw extruder ("TEX30α" made by The Japan Steel Works, Ltd. L/D = 42) under conditions of a cylinder set temperature of 260°C, a discharge amount of 40 kg/h and a rotation number of the screw of 200 rpm to give a resin composition. The resin composition was rapidly cooled in a water bath and pelletized using a pelletizer to give pellets of the resin composition.

### <Method for measuring content of acid>

The content of acid in the resin composition was calculated from the content of acid (e.g., maleic anhydride) in the raw material (e.g., maleic anhydride polymer). More specifically, the content of acid was calculated by multiplying the content of the acid-modified polymer in 100 parts by mass of the resin composition including all additives by the content ratio of acid in the polymer.

### <Tensile strength>

The pellets obtained in the above was dried at 120°C for 5 hours, and then injection-molded using an injection molding machine made by The Japan Steel Works, Ltd. (clamping capacity 85T) under conditions of a cylinder temperature of 250°C and a mold temperature of 80°C to give an ISO multi-purpose test piece (having a thickness of 4 mm).

Tensile strength (unit: MPa) was measured by using the above ISO multi-purpose test piece (having a thickness of 4 mm) according to ISO 527.

### <Bending properties>

Bending strength (unit: MPa) and flexural modulus (unit: MPa) were measured at a temperature of 23°C by using the above ISO multi-purpose test piece (having a thickness of 4 mm) according to ISO 178.

### <Charpy impact strength>

Charpy notched impact strength (unit: kJ/m²) of a notched test piece prepared by forming a notch in the above ISO multi-purpose test piece (having a thickness of 4 mm) was measured at 23°C according to ISO 179.

### <Disc warpage>

The above resin composition was molded into a disc having a diameter of 100 mm and a thickness of 1.6 mm using an injection molding machine ("NEX80-9E" made by Nissei Plastic Industrial Co., Ltd.) with a side gate mold under conditions of a cylinder temperature of 260°C and a mold temperature of 80°C. After molding, the disc was left overnight in an environment of 23°C and 50% RH, and the amount of warpage of the disc (unit: mm) was measured.

Low warpage was assessed according to the following criteria.
A: Amount of warpage of less than 3 mm
B: Amount of warpage of 3 mm or more and less than 5 mm
C: Amount of warpage of 5 mm or more

### <Arithmetic mean height (Sa)>

In Examples 1 to 6, 9 to 19 and Comparative Examples 1 to 3, the above ISO multi-purpose test piece (having a thickness of 4 mm) was prepared according to ISO 179. The above ISO multi-purpose test piece (having a thickness of 4 mm) was prepared according to ISO 179 except for changing the mold temperature in molding to 40°C in Example 7 and changing the mold temperature in molding to 120°C in Example 8. The surface of the above ISO multi-purpose test piece (having a thickness of 4 mm) was observed with a hybrid laser microscope (OPTELICS HYBRID made by LASERTEC) with an objective lens at a magnification of 10. The arithmetic mean height (Sa) was measured using the attached analysis software (Lasertec Microscope Solution Software LMeye7) according to ISO 25178.

In the measurement, an FZ image of average surface irregularities in the center of the chuck part of the ISO multi-purpose test piece (having a thickness of 4 mm) was obtained using measurement algorithm Fine Peak. The measurement area was at the center of the bonded part with an adhesive. The cut off value λC is 0.8000 mm.

The same procedure was repeated 30 times at given different sites, and the mean value was calculated.

### <Adhesion strength to epoxy adhesive and condition of interface>

In Examples 1 to 6, 9 to 19 and Comparative Examples 1 to 3, two of the above ISO multi-purpose test pieces (having a thickness of 4 mm) were prepared according to ISO 179. The above two ISO multi-purpose test pieces (having a thickness of 4 mm) were prepared according to ISO 179 except for changing the mold temperature in molding to 40°C in Example 7 and changing the mold temperature in molding to 120°C in Example 8. As shown in Figure 1, fluororesin tape 2 (NITOFLON adhesive tape made by Nitto, 0.18 × 10 × 10 mm) was attached to the chuck part of one of the two ISO multi-purpose test pieces 1. Next, an adhesive 3 was applied thereto in a region of 20 mm × 20 mm × 0.18 mm thick, and the test piece 1 was bonded to the other ISO multi-purpose test piece 4 (having a thickness of 4 mm). Then they were fixed with a binder clip and the adhesive was cured under predetermined curing conditions to bond them.

The ISO multi-purpose test pieces 1, 4 were stretched by Tensilon 1t at 5 mm/min in the direction of the arrow shown in Figure 1 to perform a tensile test. In the tensile test, a spacer was used to set the test piece vertically.

The unit of adhesion strength is N.

Furthermore, the condition of the interface after bonding was observed and described as follows.
Material failure after test: Base material failure
Adhesive failure after test: Cohesion failure
Separation at interface between adhesive and resin after test: Interface separation

A one component heat curing adhesive was used as the epoxy adhesive.

### <Adhesion strength to modified silicone adhesive and condition of interface>

Adhesion strength was measured in the same manner as in the above case of measuring the adhesion strength to the epoxy resin adhesive except for changing the adhesive to a modified silicone adhesive (a one component room temperature curable adhesive mainly composed of modified silicone polymer).

The unit of adhesion strength is N.

Furthermore, the condition of the interface after bonding was observed.

### <Adhesion strength to urethane adhesive and condition of interface>

Adhesion strength was measured in the same manner as in the above case of measuring the adhesion strength to the epoxy resin adhesive except for changing the adhesive to a urethane adhesive.

The unit of adhesion strength is N.

Furthermore, the condition of the interface after bonding was observed.

### <Adhesion strength to acrylic adhesive and condition of interface>

An aluminum die cast piece with a width of 12 mm × 45 mm and a thickness of 1.5 mm was prepared.

The above resin composition was molded into a flat plate having a width of 100 mm × 100 mm and a thickness of 2 mm using an injection molding machine ("NEX80-9E" made by Nissei Plastic Industrial Co., Ltd.) with a film gate mold under conditions of a cylinder temperature of 260°C and a mold temperature of 80°C. The plate was cut into 50 mm × 10 mm with a processing machine.

Fluororesin tape (NITOFLON adhesive tape made by Nitto, 0.18 × 10 × 10 mm) was attached to the end of the flat plate processed. Next, an acrylic adhesive was applied thereto in a region of 10 mm × 10 mm × 0.18 mm thick and the plate was bonded to aluminum die cast (having a thickness of 1.5 mm). Then they were fixed with a binder clip and the adhesive was cured under predetermined curing conditions to bond them.

After bonding, the test piece was stretched by Tensilon 1t at 5 mm/min to perform a tensile test. In the tensile test, a spacer was used to set the test piece vertically.

The unit of adhesion strength is N.

Furthermore, the condition of the interface after bonding was observed.

### <Comprehensive evaluation of adhesiveness>

The above adhesion strength and the condition of the interface were evaluated as described below.

For the adhesiveness to the epoxy adhesive, those whose base material was broken were rated as a.

Those having an adhesive strength (N) to the modified silicone adhesive of 650 N or more were rated as a, and those with that of 350 N or more and less than 650 N were rated as b.

Comprehensive evaluation: those with two a's were determined as A, those with one a and one b were determined as B, those with one a and no b were determined as C and those with no a or b were determined as D.

**[Table 3-1]**

| | | | | Example 1 | Example 2 | Example 3 |
|---|---|---|---|---|---|---|
| Resin composition | | (A) Crystalline thermoplastic resin | A1 | 100 | 100 | 100 |
| | | (B) Acid-modified polymer | B1 | 15.9 | 17.9 | |
| | | | B2 | | | 9.6 |
| | | | B3 | | | |
| | | (C) Amorphous resin | C1 | 39.9 | 37.6 | 46.0 |
| | | | C2 | | | |
| | | (D) Epoxy group-containing compound | D1 | | | |
| | | (E) Release agent | E1 | 1.1 | 1.3 | 1.3 |
| | | | E2 | | | |
| | | (F) Impact modifier | F1 | | 20.5 | 20.5 |
| | | (G) Stabilizer | G1 | 0.7 | 0.8 | 0.8 |
| | | (H) Colorant | H1 | 2.3 | 2.6 | 2.6 |
| | | (I) Reinforcing filler | I1 | 68.2 | 76.9 | 76.9 |
| | | | I2 | | | |
| | | | I3 | | | |
| | | (J) Flame retardant | J1 | | | |
| | | (K) Anti-dripping agent | K1 | | | |
| | | (L) Antimony trioxide | L1 | | | |
| | | Acid content (%) | | 0.6 | 0.6 | 0.6 |
| Evaluation | Resin layer | Tensile strength (MPa) | | 126 | 123 | 121 |
| | | Bending strength (MPa) | | 184 | 177 | 173 |
| | | Flexural modulus (MPa) | | 9720 | 8940 | 8860 |
| | | Charpy impact strength (kJ/m²) | | 7 | 8 | 7 |
| | | Disc warpage | | A | A | B |
| | | Arithmetic mean height (Sa) | | - | 1.15 | 0.78 |
| | Adhesion test on same materials | Adhesion strength to epoxy adhesive (N) | | >2000 | >2000 | >2000 |
| | | Condition of interface after bonding to epoxy adhesive | | Base material failure | Base material failure | Base material failure |
| | | Adhesion strength to modified silicone adhesive (N) | | 696 | 620 | 529 |
| | | Condition of interface after bonding to modified silicone adhesive | | Interface separation/ Cohesion failure | Interface separation | Interface separation |
| | | Adhesion strength to urethane adhesive (N) | | - | - | - |
| | | Condition of interface after bonding to urethane adhesive | | - | - | - |
| | Adhesion test on ADC 12 | Adhesion strength to acrylic adhesive (N) | | - | - | - |
| | | Condition of interface after bonding to acrylic adhesive | | - | - | - |
| | | Comprehensive evaluation of adhesiveness | | A | B | B |

**[Table 3-2]**

| | | | | Example 4 | Example 5 | Example 6 |
|---|---|---|---|---|---|---|
| Resin composition | | (A) Crystalline thermoplastic resin | A1 | 100 | 100 | 100 |
| | | (B) Acid-modified polymer | B1 | | 53.0 | |
| | | | B2 | | | |
| | | | B3 | 5.1 | | 15.4 |
| | | (C) Amorphous resin | C1 | 50.4 | 2.6 | 40.2 |
| | | | C2 | | | |
| | | (D) Epoxy group-containing compound | D1 | | | |
| | | (E) Release agent | E1 | 1.3 | 1.3 | 1.3 |
| | | | E2 | | | |
| | | (F) Impact modifier | F1 | 20.5 | 20.5 | 20.5 |
| | | (G) Stabilizer | G1 | 0.8 | 0.8 | 0.8 |
| | | (H) Colorant | H1 | 2.6 | 2.6 | 2.6 |
| | | (I) Reinforcing filler | I1 | 76.9 | 76.9 | 76.9 |
| | | | I2 | | | |
| | | | I3 | | | |
| | | (J) Flame retardant | J1 | | | |
| | | (K) Anti-dripping agent | K1 | | | |
| | | (L) Antimony trioxide | L1 | | | |
| | | Acid content (%) | | 0.6 | 1.7 | 1.7 |
| Evaluation | Resin layer | Tensile strength (MPa) | | 125 | 115 | 124 |
| | | Bending strength (MPa) | | 178 | 169 | 179 |
| | | Flexural modulus (MPa) | | 8944 | 8910 | 9200 |
| | | Charpy impact strength (kJ/m²) | | 8 | 9 | 8 |
| | | Disc warpage | | B | A | A |
| | | Arithmetic mean height (Sa) | | 0.89 | 1.14 | 1.38 |
| | Adhesion test on same materials | Adhesion strength to epoxy adhesive (N) | | >2000 | >2000 | >2000 |
| | | Condition of interface after bonding to epoxy adhesive | | Base material failure | Base material failure | Base material failure |
| | | Adhesion strength to modified silicone adhesive (N) | | 475 | 725 | 710 |
| | | Condition of interface after bonding to modified silicone adhesive | | Interface separation | Cohesion failure | Interface separation/ Cohesion failure |
| | | Adhesion strength to urethane adhesive (N) | | - | 1133 | - |
| | | Condition of interface after bonding to urethane adhesive | | - | Cohesion failure | - |
| | Adhesion test on ADC 12 | Adhesion strength to acrylic adhesive (N) | | - | 515 | - |
| | | Condition of interface after bonding to acrylic adhesive | | - | Cohesion failure | - |
| | | Comprehensive evaluation of adhesiveness | | B | A | A |

**[Table 4-1]**

| | | | | Example 7 | Example 8 | Example 9 | Example 10 |
|---|---|---|---|---|---|---|---|
| Resin composition | | (A) Crystalline thermoplastic resin | A1 | 100 | 100 | 100 | 100 |
| | | (B) Acid-modified polymer | B1 | | | | 34.0 |
| | | | B2 | | | | |
| | | | B3 | 15.4 | 15.4 | 25.6 | |
| | | (C) Amorphous resin | C1 | 40.2 | 40.2 | 29.9 | |
| | | | C2 | | | | 34.0 |
| | | (D) Epoxy group-containing compound | D1 | | | | 0.6 |
| | | (E) Release agent | E1 | 1.3 | 1.3 | 1.3 | |
| | | | E2 | | | | |
| | | (F) Impact modifier | F1 | 20.5 | 20.5 | 20.5 | |
| | | (G) Stabilizer | G1 | 0.8 | 0.8 | 0.8 | 0.6 |
| | | (H) Colorant | H1 | 2.6 | 2.6 | 2.6 | 2.0 |
| | | (I) Reinforcing filler | I1 | 76.9 | 76.9 | 76.9 | |
| | | | I2 | | | | 30.0 |
| | | | I3 | | | | |
| | | (J) Flame retardant | J1 | | | | |
| | | (K) Anti-dripping agent | K1 | | | | |
| | | (L) Antimony trioxide | L1 | | | | |
| | | Acid content (%) | | 1.7 | 1.7 | 2.8 | 1.4 |
| Evaluation | Resin layer | Tensile strength (MPa) | | 124 | 124 | 123 | 92 |
| | | Bending strength (MPa) | | 179 | 179 | 177 | 137 |
| | | Flexural modulus (MPa) | | 9200 | 9200 | 8930 | 5510 |
| | | Charpy impact strength (kJ/m²) | | 8 | 8 | 7 | 8 |
| | | Disc warpage | | A | A | A | A |
| | | Arithmetic mean height (Sa) | | 2.47 | 0.99 | 1.83 | - |
| | Adhesion test on same materials | Adhesion strength to epoxy adhesive (N) | | >2000 | >2000 | >2000 | >2000 |
| | | Condition of interface after bonding to epoxy adhesive | | Base material failure | Base material failure | Base material failure | Base material failure |
| | | Adhesion strength to modified silicone adhesive (N) | | 783 | 650 | 675 | 707 |
| | | Condition of interface after bonding to modified silicone adhesive | | Cohesion failure | Cohesion failure | Interface separation/ Cohesion failure | Cohesion failure |
| | | Adhesion strength to urethane adhesive (N) | | - | - | 675 | 600 |
| | | Condition of interface after bonding to urethane adhesive | | - | - | Cohesion failure | Cohesion failure |
| | Adhesion test on ADC 12 | Adhesion strength to acrylic adhesive (N) | | - | - | 672 | 502 |
| | | Condition of interface after bonding to acrylic adhesive | | - | - | Cohesion failure | Cohesion failure |
| | | Comprehensive evaluation of adhesiveness | | A | A | A | A |

**[Table 4-2]**

| | | | | Example 11 | Example 12 | Example 13 |
|---|---|---|---|---|---|---|
| Resin composition | | (A) Crystalline thermoplastic resin | A1 | 100 | 100 | 100 |
| | | (B) Acid-modified polymer | B1 | | | |
| | | | B2 | | | |
| | | | B3 | 20.9 | 34.7 | 8.7 |
| | | (C) Amorphous resin | C1 | 56.1 | 41.7 | 21.9 |
| | | | C2 | | | |
| | | (D) Epoxy group-containing compound | D1 | | | |
| | | (E) Release agent | E1 | 1.7 | 1.7 | 0.7 |
| | | | E2 | | | |
| | | (F) Impact modifier | F1 | | | 11.6 |
| | | (G) Stabilizer | G1 | 1.0 | 10 | 0.4 |
| | | (H) Colorant | H1 | 7.0 | 6.9 | 1.4 |
| | | (I) Reinforcing filler | I1 | 104.5 | 104.2 | |
| | | | I2 | | | |
| | | | I3 | | | |
| | | (J) Flame retardant | J1 | 39.7 | 39.6 | |
| | | (K) Anti-dripping agent | K1 | 1.7 | 1.7 | |
| | | (L) Antimony trioxide | L1 | 15.6 | 15.6 | |
| | | Acid content (%) | | 1.7 | 2.8 | 1.7 |
| Evaluation | Resin layer | Tensile strength (MPa) | | 121 | 117 | 59 |
| | | Bending strength (MPa) | | 182 | 183 | 85 |
| | | Flexural modulus (MPa) | | 9170 | 9330 | 2520 |
| | | Charpy impact strength (kJ/m²) | | 8 | 8 | 4 |
| | | Disc warpage | | A | A | A |
| | | Arithmetic mean height (Sa) | | 1.98 | 2.17 | 0.11 |
| | Adhesion test on same materials | Adhesion strength to epoxy adhesive (N) | | >2000 | >2000 | >1000 |
| | | Condition of interface after bonding to epoxy adhesive | | Base material failure | Base material failure | Base material failure |
| | | Adhesion strength to modified silicone adhesive (N) | | 1070 | 1170 | 770 |
| | | Condition of interface after bonding to modified silicone adhesive | | Cohesion failure | Cohesion failure | Cohesion failure |
| | | Adhesion strength to urethane adhesive (N) | | - | - | - |
| | | Condition of interface after bonding to urethane adhesive | | - | - | - |
| | Adhesion test on ADC 12 | Adhesion strength to acrylic adhesive (N) | | - | - | - |
| | | Condition of interface after bonding to acrylic adhesive | | - | - | - |
| | | Comprehensive evaluation of adhesiveness | | A | A | A |

**[Table 5-1]**

| | | | | Example 14 | Example 15 | Example 16 | Example 17 |
|---|---|---|---|---|---|---|---|
| Resin composition | | (A) Crystalline thermoplastic resin | A1 | 100 | 100 | 100 | 100 |
| | | (B) Acid-modified polymer | B1 | | | | 17.1 |
| | | | B2 | | | | |
| | | | B3 | 11.9 | 22.6 | 15.6 | |
| | | (C) Amorphous resin | C1 | 36.9 | 47.8 | 40.7 | |
| | | | C2 | | | | 51.2 |
| | | (D) Epoxy group-containing compound | D1 | | | | 0.4 |
| | | (E) Release agent | E1 | 1.0 | 1.9 | 1.3 | 1.2 |
| | | | E2 | | | | |
| | | (F) Impact modifier | F1 | 15.8 | 30.2 | 20.8 | |
| | | (G) Stabilizer | G1 | 0.6 | 1.1 | 0.8 | 0.7 |
| | | (H) Colorant | H1 | 2.0 | 3.8 | 2.6 | 2.5 |
| | | (I) Reinforcing filler | I1 | 29.7 | 169.6 | | 74.2 |
| | | | I2 | | | | |
| | | | I3 | | | 77.9 | |
| | | (J) Flame retardant | J1 | | | | |
| | | (K) Anti-dripping agent | K1 | | | | |
| | | (L) Antimony trioxide | L1 | | | | |
| | | Acid content (%) | | 1.7 | 1.7 | 1.7 | 0.6 |
| Evaluation | Resin layer | Tensile strength (MPa) | | 96 | 128 | 124 | 125 |
| | | Bending strength (MPa) | | 133 | 188 | 177 | 185 |
| | | Flexural modulus (MPa) | | 5440 | 13000 | 9130 | 8800 |
| | | Charpy impact strength (kJ/m²) | | 5 | 8 | a | 10 |
| | | Disc warpage | | A | A | A | B |
| | | Arithmetic mean height (Sa) | | 0.63 | 0.92 | 0.99 | 0.84 |
| | Adhesion test on same materials | Adhesion strength to epoxy adhesive (N) | | >2000 | >2000 | >2000 | >2000 |
| | | Condition of interface after bonding to epoxy adhesive | | Base material failure | Base material failure | Base material failure | Base material failure |
| | | Adhesion strength to modified silicone adhesive (N) | | 755 | 805 | 742 | 580 |
| | | Condition of interface after bonding to modified silicone adhesive | | Cohesion failure | Cohesion failure | Cohesion failure | Interface separation |
| | | Adhesion strength to urethane adhesive (N) | | - | - | - | - |
| | | Condition of interface after bonding to urethane adhesive | | - | - | - | - |
| | Adhesion test on ADC 12 | Adhesion strength to acrylic adhesive (N) | | - | - | - | - |
| | | Condition of interface after bonding to acrylic adhesive | | - | - | - | - |
| | | Comprehensive evaluation of adhesiveness | | A | A | A | B |

**[Table 5-2]**

| | | | | Comparative Example 1 | Comparative Example 2 | Comparative Example 3 |
|---|---|---|---|---|---|---|
| Resin composition | | (A) Crystalline thermoplastic resin | A1 | 100 | 100 | 100 |
| | | (B) Acid-modified polymer | B1 | | | 14.1 |
| | | | B2 | | | |
| | | | B3 | | | |
| | | (C) Amorphous resin | C1 | 55.8 | | |
| | | | C2 | | | 28.2 |
| | | (D) Epoxy group-containing compound | D1 | | 0.4 | 0.5 |
| | | (E) Release agent | E1 | 1.1 | | |
| | | | E2 | | 0.4 | |
| | | (F) Impact modifier | F1 | | | |
| | | (G) Stabilizer | G1 | 0.7 | 0.4 | |
| | | (H) Colorant | H1 | 2.3 | 0.3 | |
| | | (I) Reinforcing filler | 11 | 68.2 | | 114.0 |
| | | | I2 | | 17.9 | |
| | | | I3 | | | |
| | | (J) Flame retardant | J1 | | | |
| | | (K) Anti-dripping agent | K1 | | | |
| | | (L) Antimony trioxide | L1 | | | |
| | | Acid content (%) | | 0.0 | 0.0 | 0.4 |
| Evaluation | Resin layer | Tensile strength (MPa) | | 123 | 110 | 120 |
| | | Bending strength (MPa) | | 186 | 165 | 176 |
| | | Flexural modulus (MPa) | | 9640 | 5500 | 9230 |
| | | Charpy impact strength (kJ/m²) | | 6 | 7 | 7 |
| | | Disc warpage | | B | B | B |
| | | Arithmetic mean height (Sa) | | 0.58 | - | - |
| | Adhesion test on same materials | Adhesion strength to epoxy adhesive (N) | | 1956 | 682 | >2000 |
| | | Condition of interface after bonding to epoxy adhesive | | Cohesion failure | Interface separation | Base material failure |
| | | Adhesion strength to modified silicone adhesive (N) | | 193 | 174 | 320 |
| | | Condition of interface after bonding to modified silicone adhesive | | Interface separation | Interface separation | Interface separation |
| | | Adhesion strength to urethane adhesive (N) | | - | - | - |
| | | Condition of interface after bonding to urethane adhesive | | not bonded | - | - |
| | Adhesion test on ADC 12 | Adhesion strength to acrylic adhesive (N) | | 402 | — | - |
| | | Condition of interface after bonding to acrylic adhesive | | Interface separation | - | - |
| | | Comprehensive evaluation of adhesiveness | | D | D | C |

**[Table 6]**

| | | | Example 18 | Example 19 |
|---|---|---|---|---|
| Resin composition | (A) Crystalline thermoplastic resin | A1 | 100 | 100 |
| | (B) Acid-modified polymer | B4 | 7.2 | |
| | | B5 | | 17.9 |
| | (C) Amorphous resin | C1 | 48.7 | 38.5 |
| | | C2 | | |
| | (D) Epoxy group-containing compound | D1 | 0.5 | |
| | (E) Release agent | E1 | 1.3 | 1.3 |
| | | E2 | | |
| | (F) Impact modifier | F1 | 20.5 | 20.5 |
| | (G) Stabilizer | G1 | 0.8 | 0.8 |
| | (H) Colorant | H1 | 2.6 | 2.6 |
| | (I) Reinforcing filler | I1 | 76.9 | 76.9 |
| | | I2 | | |
| | Acid content (%) | | 0.6 | 1.1 |
| Evaluation | Tensile strength (MPa) | | 105 | 120 |
| | Bending strength (MPa) | | 150 | 170 |
| | Flexural modulus (MPa) | | 9070 | 9000 |
| | Charpy impact strength (kJ/m²) | | 6 | 8 |
| | Disc warpage | | B | B |
| | Arithmetic mean height (Sa) | | - | - |
| | Adhesion strength to epoxy adhesive (N) | | >2000 | >2000 |
| | Condition of interface after bonding to epoxy adhesive | | Base material failure | Base material failure |
| | Adhesion strength to modified silicone adhesive (N) | | 362 | 384 |
| | Condition of interface after bonding to modified silicone adhesive | | Interface separation | Interface separation |
| | Comprehensive evaluation of adhesiveness | | B | B |

The above results clearly show that the resin compositions of Examples have excellent adhesiveness to further members (Examples 1 to 19). Furthermore, by including an amorphous resin, warpage was effectively suppressed.

All maleic anhydride modified polymers of the styrene-maleic anhydride polymer, the styrene-N-phenylmaleimide-maleic anhydride polymer and the α-olefin-maleic anhydride polymer had excellent adhesiveness to further members. In particular, the styrene-maleic anhydride polymer had the highest adhesiveness to further members (Examples 1 to 17).

By contrast, the resin compositions without an acid-modified polymer (Comparative Example 1) had poor adhesiveness (Comparative Example 2). The resin composition in which the amount of the acid-modified polymer was insufficient had poor adhesiveness (Comparative Example 3).

### [Reference Signs List]

- 1: ISO multi-purpose test piece
- 2: Fluororesin tape
- 3: Adhesive
- 4: ISO multi-purpose test piece

## Claims

1. A multilayer body comprising:
a molded product formed from a resin composition comprising a crystalline thermoplastic resin (A) and an acid-modified polymer (B); and
a further member bonded to the molded product directly, or via at least an adhesive,
wherein a content of the crystalline thermoplastic resin (A) in the resin composition is higher than a content of the acid-modified polymer (B) in the resin composition, and
a content of acid in the resin composition is 0.5% by mass or more.

2. The multilayer body according to claim 1, wherein the molded product and the further member are directly bonded in some part.

3. The multilayer body according to claim 1, further comprising an adhesive,
wherein the molded product and the further member are bonded via at least the adhesive.

4. The multilayer body according to any one of claims 1 to 3, wherein the crystalline thermoplastic resin (A) comprises a crystalline thermoplastic polyester resin.

5. The multilayer body according to any one of claims 1 to 3, wherein the crystalline thermoplastic resin (A) comprises a polybutylene terephthalate resin.

6. The multilayer body according to any one of claims 1 to 3, wherein the acid-modified polymer (B) has a weight average molecular weight of 150,000 or more.

7. The multilayer body according to any one of claims 1 to 3, wherein the content of acid in the resin composition is 1% by mass or more.

8. The multilayer body according to any one of claims 1 to 3, wherein the acid-modified polymer (B) comprises a maleic anhydride polymer.

9. The multilayer body according to any one of claims 1 to 3, wherein the acid-modified polymer (B) comprises a styrene-maleic anhydride polymer.

10. The multilayer body according to any one of claims 1 to 3, wherein the molded product has an arithmetic mean height (Sa) of 1.0 or more in a region to be bonded to the further member.

11. The multilayer body according to any one of claims 1 to 3, wherein the resin composition further comprises an amorphous thermoplastic resin (C) other than the acid-modified polymer (B).

12. The multilayer body according to claim 11, wherein the amorphous thermoplastic resin (C) comprises a styrenic resin.

13. The multilayer body according to any one of claims 1 to 3, wherein the resin composition further comprises an impact modifier.

14. The multilayer body according to claim 13, wherein the impact modifier comprises a core-shell elastomer.

15. The multilayer body according to any one of claims 1 to 3, wherein the resin composition further comprises a reinforcing filler.

16. The multilayer body according to claim 15, wherein the reinforcing filler comprises glass.

17. The multilayer body according to any one of claims 1 to 3, wherein the resin composition further comprises a flame retardant.

18. The multilayer body according to claim 1,
wherein the crystalline thermoplastic resin (A) comprises a polybutylene terephthalate resin,
the content of acid in the resin composition is 1% by mass or more,
the acid-modified polymer (B) comprises a styrene-maleic anhydride polymer,
the resin composition further comprises an amorphous thermoplastic resin (C) other than the acid-modified polymer (B),
the amorphous thermoplastic resin (C) comprises a styrenic resin, and
the resin composition further comprises a glass fiber.

19. The multilayer body according to claim 18, wherein the resin composition further comprises a core-shell elastomer.

20. A molded article comprising the multilayer body according to any one of claims 1 to 3, 18 and 19.
